(19) Europäisches Patentamt
European Patent Office
Office européen des brevets

(11) **EP 3 730 684 B1**

(12) **EUROPEAN PATENT SPECIFICATION**

(45) Date of publication and mention
of the grant of the patent:
**02.02.2022 Bulletin 2022/05**

(21) Application number: **18892655.4**

(22) Date of filing: **13.12.2018**

(51) International Patent Classification (IPC):
**B32B 5/02** *(2006.01)*   **B32B 5/08** *(2006.01)*
**B32B 5/24** *(2006.01)*   **B32B 5/26** *(2006.01)*
**B60R 13/08** *(2006.01)*   **D04H 5/06** *(2006.01)*
**G10K 11/168** *(2006.01)*   **D04H 3/011** *(2012.01)*
**D04H 3/016** *(2012.01)*   **D04H 3/14** *(2012.01)*
**D04H 3/147** *(2012.01)*   **D04H 3/16** *(2006.01)*

(52) Cooperative Patent Classification (CPC):
**D04H 5/06; B32B 5/022; B32B 5/06; B32B 5/08;**
**B32B 5/18; B32B 5/20; B32B 5/245; B32B 5/26;**
**B32B 7/04; B32B 7/12; G10K 11/168;**
B32B 2262/02; B32B 2262/0253; B32B 2262/0261;
B32B 2262/0284;                              (Cont.)

(86) International application number:
**PCT/JP2018/045985**

(87) International publication number:
**WO 2019/124231 (27.06.2019 Gazette 2019/26)**

(54) **NONWOVEN FABRIC AND COMPOSITE SOUND-ABSORBING MATERIAL USING SAME AS SKIN MATERIAL**

VLIESSTOFF UND SCHALLABSORBIERENDES VERBUNDMATERIAL MIT VERWENDUNG DAVON ALS HAUTMATERIAL

TISSU NON TISSÉ ET MATÉRIAU COMPOSITE ABSORBANT LES SONS L'UTILISANT COMME MATÉRIAU DE PEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2017   JP 2017246351**
**22.12.2017   JP 2017246588**
**15.01.2018   JP 2018004214**

(43) Date of publication of application:
**28.10.2020 Bulletin 2020/44**

(73) Proprietor: **Asahi Kasei Kabushiki Kaisha**
**Tokyo 1000006 (JP)**

(72) Inventors:
• **YAMAMURO, Shinya**
**Tokyo 100-0006 (JP)**
• **OBI, Rumina**
**Tokyo 100-0006 (JP)**

• **KATO, Kazufumi**
**Tokyo 100-0006 (JP)**
• **TANAKA, Tomoya**
**Tokyo 100-0006 (JP)**
• **OKAMURA, Chie**
**Tokyo 100-0006 (JP)**
• **ISONO, Yasushi**
**Tokyo 100-0006 (JP)**
• **SAITO, Junki**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**WO-A1-2004/094136     JP-A- 2004 143 632**

**JP-B2- H 086 242**     **US-A1- 2015 345 054**

- **DATABASE WPI Week 201418 Thomson Scientific, London, GB; AN 2014-D73476 XP002801315, & JP 2014 037647 A (KURARAY CO LTD) 27 February 2014 (2014-02-27)**

(52)  Cooperative Patent Classification (CPC): (Cont.)
B32B 2262/12; B32B 2262/14; B32B 2266/0228;
B32B 2266/0242; B32B 2266/025;
B32B 2266/0264; B32B 2266/0278;
B32B 2266/0285; B32B 2266/06; B32B 2307/10;
B32B 2307/306; B32B 2307/3065; B32B 2307/42;
B32B 2307/546; B32B 2307/7163; B32B 2307/718;
B32B 2307/72; B32B 2307/724; B32B 2307/7265;
B32B 2307/744; B32B 2307/75; B32B 2419/00;
B32B 2509/00; B32B 2605/00; D04H 3/011;
D04H 3/016; D04H 3/14; D04H 3/147; D04H 3/16

**Description**

FIELD

The invention relates to a nonwoven fabric. Specifically, the invention relates to a nonwoven fabric that, when used as a skin material for a composite sound-absorbing material, efficiently increases the sound absorption property of the base material while having satisfactory moldability, small thickness, light weight, excellent shape stability and excellent connectivity with the base material, as well as to a composite sound-absorbing material using the same as a skin material.

BACKGROUND

Traveling vehicles produce various kinds of noise including noise from engines and drive systems mounted in the vehicles, road noise from traveling, and wind noise. In order to avoid discomfort to passengers by such noise, sound-absorbing materials are applied as anti-noise measures, on the wall faces of engine hoods, dash panels, ceiling materials, door trimmings and cab floors. In PTL 1, for example, there is proposed a multilayer structure comprising a sound-absorbing material made of a porous material such as a nonwoven fabric or resin foam as the sound-absorbing material, and a skin layer such as a nonwoven fabric or resin film whose air permeability is controlled to a fixed range, layered in an integral manner on the sound-absorbing base material. The skin layer, however, may have a complex shape depending on the particular vehicle member, and must be moldable, so that it needs to have both controlled air permeability and moldability.

PTL 2 proposes a sound-absorbing material comprising a nonwoven fabric surface material made of a layered nonwoven fabric with a melt-blown ultrafine fiber layer and a synthetic long fiber layer integrated by thermocompression bonding, and a synthetic fiber nonwoven fabric back material with a coarse structure at a bulk density of 0.005 to 0.15 g/cm$^3$, but the moldability of the nonwoven fabric surface material is not at all mentioned, while the synthetic fiber nonwoven fabric serving as the surface material also significantly affects the sound-absorbing material, and therefore it has not been able to provide absorption of sound in a wide frequency range.

In PTL 3 there is proposed a nonwoven fabric with excellent moldability, comprising a melt-blown ultrafine fiber layer and a spunbond nonwoven base fabric-added staple fiber nonwoven fabric, layered in an integral manner by a mechanical interlacing method, but because it is layered in an integral manner by mechanical interlacing, it has a large nonwoven fabric thickness, which is disadvantageous from the viewpoint of occupying less space as a vehicle member. Since sound propagates and enters through the holes produced by mechanical interlacing, it also has the disadvantage of poor sound absorption properties, while breakage of the fibers can also lead to reduced nonwoven fabric strength or rigidity, and generation of dust.

In PTL 4 there is proposed a nonwoven fabric with improved moldability, having reduced molecular orientation by adding a non-compatible polymer to a polyester for the constituent fibers of a thermocompression bonded long fiber nonwoven fabric, but when a spunbond nonwoven fabric having a relatively large fiber size is used alone, the air permeability is too high and the effect of increasing the sound absorption property of the base material is inadequate.

PTL 5 also proposes a nonwoven fabric having thermoplastic long fiber layers with reduced crystal orientation as upper and lower layers, and a thermoplastic microfilament layer formed by melt blowing and having a mean fiber diameter of 2 $\mu$m to 10 $\mu$m, as an interlayer, the layers being integrated by thermal bonding using a felt calender, wherein the thermal bonding is point bonding between the fiber surfaces of the thermoplastic long fiber layer, and between the fiber surfaces of the thermoplastic long fiber layer and the fiber surfaces of the thermoplastic microfilament layer. However, while the layered nonwoven fabric has excellent thermal moldability, the high degree of heat shrinkage during molding at high temperature as occurs with molding of vehicle members tends to result in disadvantageous wrinkle formation. The large fiber sizes of the thermoplastic microfilaments of the interlayer are also disadvantageous because they result in poor denseness and therefore a poor sound absorption property, as a skin material for a composite sound-absorbing material for vehicles. PTL 6 describes a sound absorption material for e.g. automotive applications, comprising a melt-blown nonwoven laminated to a polyester spunbond nonwoven by thermocompression bonding,

[CITATION LIST]

[PATENT LITERATURE]

[PTL 1] Japanese Unexamined Patent Publication No. 2015-121631
[PTL 2] Japanese Patent Publication No. 4574262

[PTL 3] Japanese Patent Publication No. 3705419

[PTL 4] Japanese Patent Application No. 2009-145425

[PTL 5] Japanese Patent Publication No. 5603575 Japanese Patent Publication No. 2014/037647

SUMMARY

[TECHNICAL PROBLEM]

In light of the prior art described above, the object of the invention is to provide a nonwoven fabric and layered nonwoven fabric that have satisfactory moldability, small thickness, light weight and excellent shape stability, and that can still have their air permeability controlled to within a fixed range even after molding, and that are also suitable as skin materials for composite sound-absorbing materials.

[SOLUTION TO PROBLEM]

As a result of much avid experimentation directed toward achieving this object, the present inventors have completed this invention upon finding that both moldability and air permeability can be controlled by layering a continuous long fiber layer comprising a specific polymer added to a polyester and/or a continuous long fiber layer having a specified range of birefringence, with an ultrafine fiber layer controlled to a specific bulk density, and integrating them by thermocompression bonding.

Specifically, the present invention is as follows.

[1] A nonwoven fabric having a layered structure in which at least one ultrafine fiber layer (M) having a mean fiber diameter of 0.3 $\mu$m to 7 $\mu$m and a basis weight of 1 g/m$^2$ to 40 g/m$^2$ and at least one continuous long fiber layer (S) having a mean fiber diameter of 10 $\mu$m to 30 $\mu$m are integrated by partial thermocompression bonding, wherein the continuous long fiber layer (S) is composed of long fibers containing 97.0 wt% to 99.9 wt% of a polyester (component A) and 0.1 wt% to 3.0 wt% of a thermoplastic resin with a glass transition point temperature of 114°C to 160°C (component B), and the bulk density of the ultrafine fiber layer (M) is 0.35 g/cm$^3$ to 0.70 g/cm$^3$.

[2] A nonwoven fabric having a layered structure in which at least one ultrafine fiber layer (M) having a mean fiber diameter of 0.3 $\mu$m to 7 $\mu$m and a basis weight of 1 g/m$^2$ to 40 g/m$^2$ and at least one continuous long fiber layer (S) having a mean fiber diameter of 10 $\mu$m to 30 $\mu$m are integrated by partial thermocompression bonding, wherein the continuous long fiber layer (S) is composed of long fibers with a birefringence of 0.04 to 0.07, and the bulk density of the ultrafine fiber layer (M) is 0.35 g/cm$^3$ to 0.70 g/cm$^3$.

[3] The nonwoven fabric according to [1] or [2] above, wherein component A is polyethylene terephthalate and component B is a polyacrylate-based resin.

[4] The nonwoven fabric according to any one of [1] to [3] above, wherein the nonwoven fabric has on its surface a continuous long fiber layer that includes fibers with a melting point of at least 30°C lower than the melting point of the other layers.

[5] The nonwoven fabric according to any one of [1] to [4] above, wherein the basis weight of the nonwoven fabric is 20 g/m$^2$ to 150 g/m$^2$, and the thickness is 2 mm or smaller.

[6] The nonwoven fabric according to any one of [1] to [5] above, wherein the thermocompression bonding area ratio is 6% to 30%.

[7] The nonwoven fabric according to any one of [1] to [6] above, wherein the ultrafine fiber layer (M) and the continuous long fiber layer (S) are both composed of polyester-based fibers.

[8] A layered nonwoven fabric in which nonwoven fabrics according to any one of [1] to [7] above are layered.

[9] The layered nonwoven fabric according to [8] above, which includes two or more ultrafine fiber layers (M), wherein one or more continuous long fiber layers (S) are disposed between each of the ultrafine fiber layers (M), and the distances between each of the ultrafine fiber layers (M) are 30 $\mu$m to 200 $\mu$m.

[10] The layered nonwoven fabric according to [8] or [9] above, wherein two or more nonwoven fabrics having an SM-type or SMS-type layered structure integrated by thermocompression bonding are layered in an integral manner.

[11] The layered nonwoven fabric according to any one of [8] to [10] above, wherein the bonding between the fibers of the ultrafine fiber layers (M) and continuous long fiber layers (S) or of the continuous long fiber layers (S) is point bonding.

[12] The nonwoven fabric according to any one of [1] to [7] above, which is to be used as a skin material of a sound-absorbing material.

[13] The layered nonwoven fabric according to any one of [8] to [11] above, which is to be used as a skin material of a sound-absorbing material.

[14] A composite sound-absorbing material comprising a nonwoven fabric according to any one of [1] to [7] above or a layered nonwoven fabric according to any one of [8] to [11] above, layered with an open-cell resin foam or a fiber porous material.

[15] The composite sound-absorbing material according to [14] above, wherein the mean sound absorption coefficient (%) for sounds impinging from the skin material side at frequencies of 1000 Hz, 1600 Hz, 2000 Hz, 2500 Hz, 3150 Hz and 4000 Hz, by normal incidence measurement according to JIS A 1405, is at least 45% higher than that of the sound-absorbing base material alone.

[ADVANTAGEOUS EFFECTS OF INVENTION]

Since the nonwoven fabric of the invention is a nonwoven fabric with satisfactory moldability, small thickness, light weight and excellent shape stability, while also allowing air permeability control to within a fixed range, and being suitable as a skin material for a composite sound-absorbing material, it can be most suitably used as a skin material for moldable composite sound-absorbing materials such as those for vehicles, homes, household electrical appliances and construction equipment.

DESCRIPTION OF EMBODIMENTS

Embodiments of the invention will now be explained in detail.

One preferred embodiment is a nonwoven fabric having a layered structure in which at least one ultrafine fiber layer (M) having a mean fiber diameter of 0.3 $\mu$m to 7 $\mu$m and a basis weight of 1 g/m$^2$ to 40 g/m$^2$ and at least one continuous long fiber layer (S) having a mean fiber diameter of 10 $\mu$m to 30 $\mu$m are integrated by partial thermocompression bonding, wherein the continuous long fiber layer (S) is composed of long fibers containing 97.0 wt% to 99.9 wt% of a polyester (component A) and 0.1 wt% to 3.0 wt% of a thermoplastic resin with a glass transition point temperature of 114°C to 160°C (component B), and the bulk density of the ultrafine fiber layer (M) is 0.35 g/cm$^3$ to 0.70 g/cm$^3$.

Another preferred embodiment is a layered nonwoven fabric having a layered structure in which at least one ultrafine fiber layer (M) having a mean fiber diameter of 0.3 $\mu$m to 7 $\mu$m and a basis weight of 1 g/m$^2$ to 40 g/m$^2$ and at least one continuous long fiber layer (S) having a mean fiber diameter of 10 $\mu$m to 30 $\mu$m are integrated by partial thermocompression bonding, wherein the continuous long fiber layer (S) is composed of long fibers with a birefringence of 0.04 to 0.07, and the bulk density of the ultrafine fiber layer (M) is 0.35 g/cm$^3$ to 0.70 g/cm$^3$.

The nonwoven fabric according to the first embodiment and the nonwoven fabric according to the other embodiment may also be layered as a layered nonwoven fabric. Nonwoven fabrics or layered nonwoven fabrics of these embodiments may be used as sound-absorbing skin materials, and may be combined with base materials that are open-cell resin foams or fiber porous materials.

As used herein, the term "nonwoven fabric" means a nonwoven fabric formed in a series by spinning during production, examples of which include SM, SMS, SMM, SMMS, SMSMS and SMSSMS. The term "layered nonwoven fabric" means a nonwoven fabric obtained by overlaying and integrating the aforementioned "nonwoven fabrics", examples of which include SMMS, SMSM, SMSMS, SMSSMS and SMMSMS.

The term "nonwoven fabric" or "layered nonwoven fabric" may also be collectively referred to herein as "skin material", "surface material" or "face material".

Since the nonwoven fabric of this embodiment has a compact structure with a very low degree of air permeability and small fiber voids in terms of its fiber structure, the wavelength of approaching sounds is reduced due to friction resistance in the pores, resulting in infiltration of sound into the fiber voids, so that when this is combined with a base material, the sound absorption property of the sound-absorbing material is drastically improved. Since a nonwoven fabric used in the composite sound-absorbing material of this embodiment includes at least one ultrafine fiber layer (M) having a mean fiber diameter of 0.3 $\mu$m to 7 $\mu$m, a basis weight of 1 g/m$^2$ to 40 g/m$^2$ and a bulk density of 0.35 g/cm$^3$ to 0.70 g/cm$^3$, vibrational sound energy is converted into thermal energy due to friction with the ultrafine fibers, and when combined with a base material it can exhibit an effect of improving the sound absorption properties of the sound-absorbing material.

In the nonwoven fabric of this embodiment, the ultrafine fiber layer (M), which has poor handleability by itself and poor moldability such that it is prone to tearing during molding, is layered and integrated by thermocompression bonding with the continuous fiber layer (S) that has lower molecular orientation of the fibers, and therefore the moldability of the ultrafine fiber layer is improved. The main role of the continuous long fiber layer can thus be exhibited, preventing excessive stress from being applied to the ultrafine fiber layer during stretching, thereby allowing the ultrafine fiber layer to be evenly stretched.

For the nonwoven fabric of this embodiment, the collecting surface is blasted with heated air under specific conditions in the step of forming the ultrafine fiber layer, thereby inhibiting self-adhesion of the ultrafine fiber layer and thus making the ultrafine fibers more easily loosened during the stretching, so that the moldability of the ultrafine fiber layer can be further improved.

The continuous long fiber layer (S) of the nonwoven fabric of this embodiment has low orientation and crystallinity of the constituent fibers, as well as cold stretchability and hot stretchability. Low orientation and low crystallinity of the continuous long fibers can be achieved by reducing the spinning speed, or by polymer blending. The orientation and crystallinity of the continuous long fibers can be measured by the birefringence, and cold stretchability and hot stretchability can be easily obtained with low birefringence.

The birefringence Δn of the continuous long fiber layer (S) is 0.015 to 0.07, more preferably 0.04 to 0.07, even more preferably 0.04 to 0.06 and most preferably 0.04 to 0.05. If the birefringence Δn is within this range, the fibers will have suitable orientation and fibers with high ductility will be obtained allowing calendering to be carried out with a sufficient heat quantity, while a sufficient heat quantity can also be added during partial thermocompression bonding and a continuous long fiber layer that is resistant to heat shrinkage and has excellent heat resistance can be obtained. A birefringence Δn within this range will also result in sufficient ductility of the fibers and will allow sufficient moldability to be obtained.

The spinning process applied for the continuous long fiber layer (S) is preferably a known spunbond method. It is preferably formed under conditions in which the yarn is homogeneously dispersed by frictional electrification or corona electrification. By employing such conditions it is easier to form a web in an unbonded state and to achieve excellent economy. The web of the continuous long fiber layer may be either a single layer or a stack of multiple layers.

The polyester-based resin forming the continuous long fiber layer (S) is a thermoplastic polyester, typical examples of which are polyethylene terephthalate, polybutylene terephthalate and polytrimethylene terephthalate. The thermoplastic polyester may also be a polyester obtained by polymerization or copolymerization of isophthalic acid or phthalic acid as an ester-forming acid component.

The continuous long fiber layer (S) of the (layered) nonwoven fabric in contact with the base material of the composite sound-absorbing material may also include fibers having a melting point of at least 30°C lower than the melting point of the other layers. That is, in order to maintain satisfactory adhesion between the nonwoven fabric skin material and the base material, the layer that contacts with the base material may have a fiber structure with a low melting point. Examples of low melting point fibers include polyester-based fibers such as aromatic polyester copolymers obtained by copolymerizing one or more compounds from among phthalic acid, isophthalic acid, sebacic acid, adipic acid, diethylene glycol and 1,4-butanediol, with polyethylene terephthalate, or aliphatic esters. Such fibers may be used alone or as composite mixed fibers with two or more types, or they may be composite mixed fibers comprising low melting point fibers and high melting point fibers. Composite fibers with a sheath-core structure, having a low melting point component as the sheath, may also be used. Examples of composite fibers with a sheath-core structure include polyethylene terephthalate, polybutylene terephthalate and copolymerized polyesters with a high-melting-point component as the core, and copolymerized polyesters and aliphatic esters with a low-melting-point component as the sheath.

The method of limiting the birefringence within the specified range may be polymer blending. The continuous long fiber layer may be one composed of polyester-based long fibers comprising 97.0 wt% to 99.9 wt% of a polyester (component A) and 0.1 wt% to 3.0 wt% of a thermoplastic resin with a glass transition point temperature of 114°C to 160°C (component B).

Typical examples of thermoplastic polyesters for the polyester (component A) include polyethylene terephthalate, polybutylene terephthalate and polytrimethylene terephthalate. The thermoplastic polyester may also be a polyester obtained by polymerization or copolymerization of isophthalic acid or phthalic acid as an ester-forming acid component.

The thermoplastic resin with a glass transition point temperature of 114°C to 160°C (component B) is preferably at least one type selected from among polyacrylate-based resins.

Since a polyacrylate-based resin may be expected to exhibit an inhibiting effect against oriented crystallization by addition in an extremely small amount, this can prevent fouling of the stretching apparatus by generation of fumes during spinning. If the amount of addition is extremely low with respect to the polyester (component A), then dispersion of the polyacrylate-based resin in the yarn during melt kneading will be homogeneous, and when the nonwoven fabric is stretched it will be possible to inhibit stretch irregularity, allowing local exposure of the sound-absorbing base material after molding to be reduced.

Polyacrylate-based resins include polymethyl methacrylate, methacrylic acid-acrylic acid binary copolymer, styrene-methyl methacrylate-maleic anhydride copolymer and styrene-methacrylic acid-cyclohexylmaleimide copolymer. In order to exhibit an inhibiting effect against oriented crystallization with an even smaller amount of addition, it is preferred to use methacrylic acid-acrylic acid binary copolymer, styrene-methacrylic acid-cyclohexylmaleimide copolymer or styrene-methyl methacrylate-maleic anhydride copolymer.

The amount of addition of the thermoplastic resin with a glass transition point temperature of 114°C to 160°C (component B) with respect to the polyester (component A), as the major component of the polyester-based long fibers, is preferably 0.1 wt% to 3.0 wt%, more preferably 0.25% to 2.5 wt% and even more preferably 0.5 wt% to 2.0 wt%, from the standpoint of spinnability and of the breaking elongation of the obtained nonwoven fabric. If the amount of addition of the polyacrylate-based resin is within the specified range it will be easier to obtain fibers with high ductility, frequent yarn breakage will be less likely to occur during spinning, and stable and continuous fibers will be obtained with improved productivity, while there will also be less tendency toward fouling of the stretching apparatus by fumes or dispersion of the polyacrylate-based resin of the yarn during spinning, and local exposure of the sound-absorbing base material after molding due to stretch irregularity is less likely to occur.

The polyester (component A) and the thermoplastic resin with a glass transition point temperature of 114°C to 160°C (component B) preferably form a sea-island structure with component A forming the sea portions and component B forming the island portions. While it is not our desire to be constrained by any particular theory, it is conjectured that this is because component B transitions from a molten state to a glassy state before component A, thus completing its stretching, so that stretching and oriented crystallization of component A which forms the sea portions is inhibited. Oriented crystallization of the sea portions is therefore reduced, so that stretching is completed with low crystallinity and fibers with high ductility are obtained. The glass transition point temperature of component B must therefore be higher than the glass transition point temperature of component A. The glass transition point temperature of component B is preferably 160°C or below to reduce the likelihood of frequent yarn breakage. Considering that the glass transition point temperature of PET is 70°C to 80°C, the glass transition temperature of component B may be 114°C to 160°C, and is preferably 120°C to 130°C.

When component B is added, the spinning speed for obtaining a continuous long fiber layer (S) may be 3000 m/min to 8000 m/min, and is preferably 4000 m/min to 6000 m/min. A high spinning speed will tend to increase the effect of creating high ductility by addition of component B. If it is 3000 m/min or higher it will be possible to inhibit oriented crystallization, and also to obtain an adequate effect of increasing the breaking elongation of the nonwoven fabric and to obtain adequate mechanical properties. If it is 8000 m/min or lower, on the other hand, fibers with high ductility can be obtained, and it will be possible to inhibit yarn breakage during spinning and to improve the productivity of the nonwoven fabric.

The method of limiting the birefringence to within the specified range may be a method of controlling the spinning speed. When component B is not added, the spinning speed for obtaining a continuous long fiber layer (S) is preferably 3000 m/min to 4000 m/min, and more preferably 3200 m/min to 3700 m/min. If the spinning speed is within this range, an inhibiting effect against oriented crystallization can be obtained, the effect of increasing the breaking elongation of the nonwoven fabric will be significant, fibers with high ductility will tend to result, and the mechanical properties will be unlikely to be inadequate.

The mean fiber diameter of the long fibers composing the continuous long fiber layer (S) is 10.0 $\mu$m to 30.0 $\mu$m, preferably 12.0 $\mu$m to 30.0 $\mu$m, more preferably 12.0 $\mu$m to 20.0 $\mu$m, even more preferably 13.0 $\mu$m to 20.0 $\mu$m and most preferably 13.0 $\mu$m to 18.0 $\mu$m. It is 10.0 $\mu$m or larger from the viewpoint of spinning stability, and 30 $\mu$m or smaller from the viewpoint of strength and heat resistance. If the mean fiber size of the long fibers is within the specified range, the crystallinity of the fibers will not be excessively high, they will have fewer crystal portions, the ductility of the fibers will increase, the moldability will tend to be satisfactory, heat shrinkage will be less likely to occur during partial thermocompression bonding, and the fibers will be unlikely to melt by the heat of the thermocompression bonding roll and to be taken up by the roll, and therefore the productivity of the nonwoven fabric will also be improved. In addition, take-up by the roll due to melting will be unlikely to occur, the covering property will be improved, the nonwoven fabric strength will be improved and the spinning stability will also be satisfactory.

The nonwoven fabric of this embodiment must include at least one ultrafine fiber layer (M). This is because without an ultrafine fiber layer it is impossible to form a compact structure with small fiber voids, and the wavelength of infiltrating sound is reduced due to friction resistance in the pores, thereby preventing control of the sound absorption property.

The ultrafine fiber layer (M) is preferably produced by melt blowing, which has relatively low production cost. The mean fiber diameter of the ultrafine fiber layer (M) is 0.3 $\mu$m to 7 $\mu$m, preferably 0.4 $\mu$m to 5 $\mu$m and more preferably 0.6 $\mu$m to 2 $\mu$m. Harsh conditions are needed for spinning to a fiber diameter of less than 0.3 $\mu$m by melt blowing, and stable fibers cannot be obtained. With a fiber diameter of greater than 7 $\mu$m, on the other hand, which is close to the fiber size of the continuous long fibers, they fail to function as microfilaments to enter and fill the voids of the continuous long fiber layer (S), and it becomes impossible to obtain a compact structure.

For compositing with a porous material having relatively low density and numerous voids, for use as the sound-absorbing material, it is desirable for the nonwoven fabric skin material disposed on the sound source side to have greater compactness, but in methods that increase the density by excessive full-surface thermocompression bonding to create compactness, the surface area of the fibers decreases due heat fusion, thus lowering thermal energy conversion caused by friction between the sound and fibers. It is therefore preferable for greater compactness to be achieved by forming finer fibers, rather than by increasing the density through excessive full-surface thermocompression bonding.

The basis weight of the ultrafine fiber layer (M) is 1 g/m$^2$ to 40 g/m$^2$, preferably 2 g/m$^2$ to 25 g/m$^2$ and more preferably 3 g/m$^2$ to 20 g/m$^2$, from the viewpoint of obtaining an adequate sound absorption property with a low basis weight.

The material used for the ultrafine fiber layer (M) is preferably a thermoplastic synthetic resin with which fibers can be formed by melt spinning. Examples of thermoplastic synthetic resins include polypropylene, copolymerized polypropylene, polyethylene terephthalate (PET), polybutylene terephthalate, aromatic polyester copolymers obtained by copolymerization of one or more compounds from among phthalic acid, isophthalic acid, sebacic acid, adipic acid, diethylene glycol and 1,4-butanediol with polyethylene terephthalate, copolymers of poly-D-lactic acid, poly-L-lactic acid and D-lactic acid with L-lactic acid, copolymers of D-lactic acid with hydroxycarboxylic acid, copolymers of L-lactic acid with hydroxycarboxylic acid, copolymers of D-lactic acid with L-lactic acid and hydroxycarboxylic acid, polyesters such as biodegradable aliphatic polyesters composed of blends of these, copolymerized polyamides, and polyphenylene sulfide. For the thermoplastic synthetic resin it is particularly preferred to use polyesters or polyphenylene sulfides, which have excellent heat resistance and water resistance.

When using PET or a copolymer thereof, the solution viscosity ($\eta$sp/c) of the ultrafine fibers is preferably 0.2 to 0.8 and more preferably 0.2 to 0.6. With PET melt-blown ultrafine fibers, crystallization is slower compared to other synthetic fibers and the voids in the continuous long fiber layer can be infiltrated while in a low-crystalline fluid state, thus allowing the voids between the fibers of the continuous long fiber layer to be filled to obtain a compact structure.

The shapes of the fiber cross-sections of the continuous long fiber layer (S) and ultrafine fiber layer (M) of the nonwoven fabric are not particularly restricted, but from the viewpoint of strength they are preferably circular cross-sections, while from the viewpoint of increasing the surface area of the fibers and forming microvoids, they are preferably atypical cross-sections, as in flat yarn.

The nonwoven fabric of this embodiment includes at least one ultrafine fiber layer (M) and includes at least one continuous long fiber layer (S), such that the constituent fibers and each layer have stretchability. The ultrafine fiber layer (M) and continuous long fiber layer (S) preferably have a layered structure such as an SM-type or SMS-type structure. From the viewpoint of homogeneity, a plurality of ultrafine fiber layers may be stacked, as in an SMM layer or SMMS layer. Fine fibers generally lack rigidity and are prone to breakage when stretched, and therefore when producing an ultrafine fiber layer it is common to increase the self-adhesion in order to improve the spinnability, which includes preventing blowing away of the yarn, and to improve the strength and handleability, but this strengthens constraint between the fibers and lowers their freedom of movement, making them resistant to elongation. For this embodiment, the continuous long fiber layer plays a major role in making excessive stress less likely to act on the ultrafine fiber layer during stretching, allowing the ultrafine fiber layer to be homogeneously stretched and allowing stretchability to be exhibited by the nonwoven fabric as a whole.

The ultrafine fibers of the nonwoven fabric of this embodiment are rendered fine by blowing with heated air during melt blowing, and are formed into a sheet on a conveyor net that is being drawn in from the back side, or on a collecting surface on the continuous long fiber layer, utilizing self-adhesion resulting from fusion between the fibers that are being blasted at high temperature. When fine fibers are formed, therefore, self-adhesion due to fusion between the fibers increases in strength, which results in a phenomenon in which they become film-like, so that when they are stretched during molding the ultrafine fiber layer fails to loosen and becomes cracked. After researching this issue, however, the present inventors have found that by setting a predetermined distance as the distance between the melt blow nozzle and the collecting surface, it is possible to control the degree of self-adhesion caused by fusion when forming fine fibers.

The indicator used for self-fusion may be the bulk density of the ultrafine fiber layer in the layered nonwoven fabric that has been integrated by thermocompression bonding. The thickness of the ultrafine fiber layer at the non-bonded sections can be directly measured by image analysis of a cross-sectional photograph taken with a scanning electron microscope (SEM), and the bulk density can be calculated from the average basis weight of the ultrafine fiber layer and the thickness of the ultrafine fiber layer. When the basis weight cannot be calculated using the ultrafine fiber layer alone, an X-ray CT image of the nonwoven fabric may be taken and the bulk density can be calculated from the area of the observed region, the volume occupied by the ultrafine fiber layer, the resin density and the thickness, based on the X-ray CT image. The X-ray CT image of the nonwoven fabric can be taken using a nano3DX high-resolution 3D X-Ray Microscope (Rigaku Corp.). The bulk density of the ultrafine fiber layer (M) is 0.35 g/cm$^3$ to 0.70 g/cm$^3$, preferably 0.40 g/m$^3$ to 0.65 g/cm$^3$ and more preferably 0.4 g/cm$^3$ to 0.6 g/cm$^3$. If it is lower than 0.7 g/cm$^3$, a film-like form will be less likely to result, and when stretched during molding, the phenomenon in which the ultrafine fiber layer fails to loosen and becomes cracked will be less likely to occur. If it is 0.35 g/cm$^3$ or higher, the self-adhesion of fusion will not be too weak, and this will tend to avoid difficulty in handling during the layering step.

The bulk density of the ultrafine fiber layer (M) referred to herein differs from the apparent density that is generally estimated from the basis weight of the nonwoven fabric as a whole and the amount of yarn. The ultrafine fiber layer (M) has a controlled degree of self-adhesion between the fibers, which is obtained not simply by calculation from the nonwoven fabric structure and material, but by actual direct measurement of the thickness of the ultrafine fiber layer. Therefore, the bulk density of the ultrafine fiber layer (M) is not simply estimated from the overall basis weight, thickness and apparent density of the SMS nonwoven fabric, for example.

The distance between the melt blow nozzle and collecting surface may be adjusted to adjust the bulk density of the ultrafine fiber layer (M) to 0.35 g/cm$^3$ to 0.70 g/cm$^3$. The distance between the melt blow nozzle and the collecting surface cannot be specified for all cases, since it should be appropriately selected depending on conditions such as the heated air temperature and flow rate and conditions such as the basis weight and conveying speed of the ultrafine fiber layer, but a distance of 100 mm to 200 mm is preferred, 110 mm to 180 mm is more preferred and 120 mm to 150 mm is even more preferred. If the distance between the melt blow nozzle and collecting surface is greater than 100 mm, the ultrafine fibers will be unlikely to form a film even if the temperature and flow rate of the heated air is increased, and the ultrafine fiber layer will be unlikely to fail to loosen and undergo cracking when it is stretched during molding. If the distance is 200 mm or smaller, entanglement between the fibers in air will be less likely to occur and marks will be less likely to be generated, while the self-adhesion of fusion will not be too weak, and handleability during the layering step will be satisfactory.

Each of the nonwoven fabric layers composing the nonwoven fabric of this embodiment is integrated by thermocompression bonding. They are preferably joined together by heating and contact bonding between a publicly known embossing roll and smooth roll, or between a smooth roll and smooth roll, for example. Thermocompression bonding is preferably carried out with a thermocompression bonded-section area ratio in the range of 6% to 30% and more preferably 7% to 25%, with respect to the total area of the nonwoven fabric. If the thermocompression bonding area ratio is 6% or greater, generation of fluff will be reduced, and if it is 30% or lower, the nonwoven fabric will be unlikely to be paper-like, and the mechanical properties such as breaking elongation and tearing strength will be unlikely to be impaired. If the thermocompression bonded-section area ratio is within this range it will be possible to satisfactorily carry out thermocompression bonding between the fibers, and a nonwoven fabric with suitable mechanical strength, rigidity and dimensional stability can be obtained.

The shapes of the thermocompression bonded sections are not particularly restricted, but preferred examples are a texture pattern, IL pattern, pinpoint pattern, diamond pattern, quadrilateral pattern, hexagonal pattern, elliptical pattern, lattice pattern, polka dot pattern or round pattern.

The distances between the thermocompression bonded sections transferred to the nonwoven fabric by thermocompression bonding are preferably in the range of 0.6 mm to 4 mm, more preferably 0.8 mm to 3.5 mm and even more preferably 1 mm to 3 mm, both in the MD direction (machine direction) of the nonwoven fabric and the CD direction (width direction) which is perpendicular to it. If the distances between the thermocompression bonded sections are within this range it will be possible to reduce any excessive increase in rigidity of the nonwoven fabric, and to adequately inhibit a phenomenon in which threads with a higher degree of freedom that are not contact bonded tend to separate from the contact-bonded sections and produce fluff. If the distances between the thermocompression bonded sections are not too narrow, then generation of fluff will be prevented, the rigidity will not be excessively high, slippage during hot press molding will be less likely to increase and the molding workability will be satisfactory. If the distances between thermocompression bonded sections are not too wide, then the rigidity of the nonwoven fabric will not be excessively low, the molding workability will be satisfactory and generation of fluff will be unlikely.

The temperature during thermocompression bonding cannot be specified for all cases as it should be appropriately selected depending on conditions such as the basis weight and speed of the supplied web, but it is preferably a temperature of 30°C to 90°C lower, and more preferably 40°C to 70°C lower, than the melting point of the resin forming the long fibers. When the type of resin contacting with the embossing roll surface and the type of resin contacting with the flat roll surface are the same, the temperature difference between the embossing roll and the flat roll is preferably less than 10°C, more preferably less than 5°C and even more preferably less than 3°C. This does not apply when the melting points of the resin contacting with the embossing roll surface and the resin contacting with the flat roll surface are different, or when the spinning speeds or yarn orientations and crystallinity are different. If the temperature difference between the embossing roll and flat roll is within the specified range, fluff will be unlikely to be generated on the roll with the lower temperature, fluff generation caused by molded shaping can also be inhibited, the yarn will be unlikely to separate from the thermocompression bonded sections due to fluff when stretching takes place during the molding, stress will be unlikely to concentrate at sections where yarn has separated, thus helping to reduce stretch irregularity, and exposure of the sound-absorbing base material can be inhibited. If the temperature difference is not excessively large, then heat resistance defects due to a lack of heat on one side will be unlikely to occur. When a difference in roll temperatures exists, the stress can be reduced during stretching to improve the moldability.

The pressure during thermocompression bonding likewise cannot be specified for all cases as it should be appropriately selected depending on conditions such as the basis weight and speed of the supplied web, but it is preferably 10 N/mm to 100 N/mm and more preferably 30 N/mm to 70 N/mm, as this range will allow satisfactory thermocompression bonding to be carried out between the fibers, and can yield a nonwoven fabric with suitable mechanical strength, rigidity and dimensional stability.

The grade of fluff on at least one side of the long fiber nonwoven fabric of this embodiment is preferably grade 3 or higher, and more preferably grade 3.5 or higher. If it is grade 3 or higher it will be adequately able to withstand handling in the molding step, and loss of embossing marks or generation of fluff after molding can be inhibited.

The difference in fluff grade between the embossing roll surface and the flat roll surface is preferably less than grade 0.5, and more preferably less than grade 0.3. If the difference in fluff grade does not exceed grade 0.5, then when the fabric is stretched during molding, it will be less prone to stress concentration and creation of stretch irregularity at locations where the yarn tends to separate from the thermocompression bonded sections due to fluff on the side with lower fluff grade, and therefore exposure of the sound-absorbing base material will tend to be inhibited. However, this does not apply if stretch iregularity are not a concern.

The basis weight of the nonwoven fabric of this embodiment is preferably 20 g/m$^2$ to 150 g/m$^2$, more preferably 25 g/m$^2$ to 150 g/m$^2$ and even more preferably 30 g/m$^2$ to 100 g/m$^2$. If the basis weight is 20 g/m$^2$ or greater, the homogeneity and denseness of the woven fabric will improve, and small voids will be obtained. If the basis weight is 150 g/m$^2$ or lower, a compact structure with small voids will be obtained, the rigidity will tend not to be too high, the moldability will be satisfactory, the handleability will be improved and cost will be lowered.

The thickness of the nonwoven fabric of this embodiment is preferably 2 mm or smaller, more preferably 0.1 mm to 2.0 mm, even more preferably 0.2 mm to 1.8 mm and most preferably 0.3 mm to 1.5 mm. If the thickness of the nonwoven fabric is within this range, the thermocompression bonding will be sufficient, and the phenomenon whereby yarn with a high degree of freedom separates from the contact-bonded sections and produces fluff will be unlikely to occur, while it is also desirable from the viewpoint of reduced space as a vehicle member, and will result in suitable rigidity, reduced wrinkle formation when the nonwoven fabric is layered, satisfactory handleability, sufficient flexibility of the sound-absorbing material when it is worked into various shapes, thus improving the workability, and no excessive collapse of the nonwoven fabric, so that an air layer can be adequately ensured in the continuous long fiber layer and a high sound absorption property can be easily obtained.

The apparent density of the nonwoven fabric of this embodiment is preferably 0.1 g/cm$^3$ to 0.7 g/cm$^3$, more preferably 0.15 g/cm$^3$ to 0.6 g/cm$^3$ and even more preferably 0.2 g/cm$^3$ to 0.55 g/cm$^3$. If the apparent density is high, the packing density of the fiber will be high and the compact structure will have smaller voids. If the apparent density is 0.1 g/cm$^3$ or greater, the denseness of the nonwoven fabric will increase and the sound-reducing effect will be improved. If the apparent density is 0.7 g/cm$^3$ or lower, the nonwoven fabric will not have excessive denseness or too few voids, infiltration of sound will be sufficient, the sound absorption coefficient will be unlikely to decrease especially near mid frequencies of 4000 Hz, and the workability will be improved.

The air permeability of the nonwoven fabric of this embodiment is preferably 100 ml/cm$^2$/sec or lower, more preferably 0.1 ml/cm$^2$/sec to 50 ml/cm$^2$/sec and even more preferably 0.5 ml/cm$^2$/sec to 30 ml/cm$^2$/sec. If the air permeability is 100 ml/cm$^2$/sec or lower, the wavelength of infiltrating sound can be reduced and an effect of lowering sound energy can be easily obtained.

The rate of increase in the air permeability of the nonwoven fabric of this embodiment, when the area development rate in an atmosphere at 150°C is 200% using a simultaneous biaxial stretching machine, compared to the air permeability before simultaneous biaxial stretching, is less than 250%, more preferably less than 225% and even more preferably less than 200%. If the rate of increase in the air permeability before and after simultaneous biaxial stretching is less than 250%, defects such as cracking and pinholes in the ultrafine fiber layer will be less likely to occur, and partial torn sections will also be less likely to form.

The sum of the maximum stress in the MD direction and the maximum stress in the CD direction for the long fiber nonwoven fabric of this embodiment, at an area development rate of 200% in an atmosphere of 150°C using a simultaneous biaxial stretching machine, is 10 N to 55 N, preferably 15 N to 50 N and more preferably 15 N to 45 N. If it is less than 55 N, the moldability will be improved, and generation of wrinkles in the recesses and irregularities in the sound-absorbing base material after molding will be eliminated, making it easier to obtain the desired structure. If it is 10 N or greater, contact bonding of the embossed sections will be adequate and fluff will be less likely to be generated. The maximum stress in the MD direction and the maximum stress in the CD direction at an area development rate of 200% was determined by measuring the maximum stress during stretching to 9.94 cm in both the MD direction and the CD direction using a simultaneous biaxial stretching machine in an atmosphere at 150°C, with a holding distance of 24 cm × 24 cm.

The dry heat shrinkage of the layered nonwoven fabric of this embodiment during 10 minutes in an atmosphere of 180°C is preferably no greater than 5%, more preferably no greater than 4% and even more preferably no greater than 3.5%. If it does not exceed 5% then notable formation of wrinkles by contraction during molding will be unlikely to occur.

Since the layered nonwoven fabric of this embodiment has a compact structure with a very low degree of air permeability and, in terms of fiber structure, having small fiber voids (pores), sound infiltrating into the fiber voids (pores) is sound of reduced amplitude due to the friction resistance in the pores, and the vibrational sound energy is converted to thermal energy by friction with the ultrafine fibers, such that when it is used as a skin material it exhibits an effect of drastically improving the sound absorption property of the sound-absorbing base material.

In the layered nonwoven fabric of this embodiment, a continuous long fiber layer (S) is disposed between ultrafine fiber layers (M), at a specific distance between the ultrafine fiber layers (M), so that the air layer of the sparse continuous long fiber layer (S) acts as a spring similar to a rear air layer, thereby causing more efficient vibration of the air in the ultrafine fiber layers (M) and producing friction between the air and ultrafine fibers in the ultrafine fiber layers (M) so that vibrational sound energy is converted into thermal energy, and when it is used as a skin material, it exhibits an effect of improving the sound absorption property of the sound-absorbing base material. Moreover, sound that has been reflected without being absorbed by the sound-absorbing base material is once again converted into thermal energy by the same effect when it passes back through the skin material of this embodiment.

The structure of the layered nonwoven fabric may comprise at least two ultrafine fiber layers (M), with one or more continuous long fiber layers (S) disposed between the ultrafine fiber layers (M). With the nonwoven fabric and layered nonwoven fabric of this embodiment, the ultrafine fiber layers (M) convert vibrational sound energy into thermal energy by friction with the ultrafine fibers, providing an effect of improving the sound absorption property of the sound-absorbing base material. The air layer of the sparse continuous long fiber layer (S) which is a feature of the nonwoven fabric of this embodiment acts as a spring similar to a rear air layer, thereby causing more efficient vibration of the air in the ultrafine fiber layers (M) and producing friction between the air and ultrafine fibers in the ultrafine fiber layers (M) so that vibrational sound energy is converted into thermal energy, and an effect of improving the sound absorption property of the sound-absorbing base material is exhibited.

The layered nonwoven fabric of this embodiment preferably has two or more layers of the nonwoven fabric, in an SM-type or SMS-type layered structure integrated by thermocompression bonding. Integration by thermocompression bonding can easily produce a layered structure.

The method for integrating the continuous long fiber layer (S) between the ultrafine fiber layers (M) may be a method of integrating by using a flat-plate hot press, or sheath-core fibers containing a bonding agent such as a hot-melt agent, or a low-melting-point component, a method of integrating by ultrasonic welding, or a method of integrating by needle punching or mechanical entangling such as hydroentangling, for example, after partial thermocompression-bonded nonwoven fabrics having an SM-type or SMS-type layered structure have first been fabricated and two or more of the nonwoven fabrics have been layered.

The distance between the ultrafine fiber layers (M) in the layered nonwoven fabric of this embodiment is preferably 30 μm to 200 μm, more preferably 40 μm to 180 μm and even more preferably 50 μm to 150 μm. If the distance between ultrafine fiber layers (M) is 30 μm or greater, the air layer of the continuous long fiber layer (S) will tend to be sufficient and a high sound absorption effect will tend to be obtained for the sound-absorbing base material. If it is 200 μm or smaller, adhesion between the nonwoven fabric layers will be sufficient and peeling will be unlikely to occur. If the distance between ultrafine fiber layers (M) is within this range, the air layer of the continuous long fiber layer (S) can be sufficiently ensured and a high sound absorption effect will be obtained for the sound-absorbing base material.

The distance between ultrafine fiber layers (M) can be obtained within this range by adjusting the amount of fibers and the fiber sizes in the continuous long fiber layer (S), the thickness by the degree of contact bonding of each nonwoven fabric layer, and the pressure of the hot press during integration when the layered nonwoven fabric is fabricated.

At least one of the layers among the continuous long fiber layers (S) contacting with the sound-absorbing base material and/or the continuous long fiber layers (S) disposed between ultrafine fiber layers (M) in the layered nonwoven fabric of this embodiment preferably includes fibers having a melting point of at least 30°C lower than the melting point of the fibers composing the ultrafine fiber layers (M). By using fibers having a melting point of at least 30°C lower, it will be easier to bond between the nonwoven fabrics and to bond between the fibers in the layered nonwoven fabric and sound-absorbing base material.

Examples of fibers with low melting points to form the nonwoven fabric or layered nonwoven fabric include polyolefin fibers such as low-density polyethylene, high-density polyethylene, polypropylene, copolymerized polyethylene and copolymerized polypropylene, aromatic polyester copolymers obtained by copolymerization of one or more compounds from among phthalic acid, isophthalic acid, sebacic acid, adipic acid, diethylene glycol and 1,4-butanediol with polyethylene terephthalate, polyester-based fibers such as aliphatic esters, and synthetic fibers such as copolymerized polyamides. Such fibers may be used alone or as composite mixed fibers with two or more types, or they may be composite mixed fibers comprising low melting point and high melting point fibers. Preferred low melting point fibers include composite fibers with a sheath-core structure, having a low-melting-point component as the sheath, examples of which include polyethylene terephthalate, polybutylene terephthalate, copolymerized polyesters, nylon 6, nylon 66 or copolymerized polyamides, having a high-melting-point component as the core, and low-density polyethylene, high-density polyethylene, polypropylene, copolymerized polyethylene, copolymerized polypropylene, copolymerized polyesters or aliphatic esters, having a low-melting-point component as the sheath.

The bonding between each of the layered nonwoven fabrics, i.e. between the ultrafine fiber layers (M) and continuous long fiber layers (S) or between the continuous long fiber layers (S), is preferably point bonding between the fibers of the layers composing the bonding surfaces. Point bonding is bonding between the surfaces of the fibers by thermal bonding using a heated roll or thermal bonding using low melting point fibers or a hot-melt agent, or partial melting of the resin composing the fibers by ultrasonic welding to weld the fibers together. The state of point bonding can be confirmed by observing a cross-section of the layered nonwoven fabric with a SEM. If the fibers are point bonded together the distances between bonded fibers are nonuniform, and when the fibers vibrate relative to each other they are subjected to different manners of vibration, easily producing a sound absorption effect. In a method of tangling and layering the fibers together, such as a method using a needle punch, the fibers of the nonwoven fabrics are not directly bonded and may therefore be less likely to be point bonded.

The skin material of this embodiment is effective as a reinforcing material for a sound-absorbing material, and can also be processed to impart surface functions such as black printability, water-repellency and flame retardance. Specifically, such treatment may be coloration treatment such as dyeing or printing, water repellency treatment with a fluororesin, additional processing with a thermosetting resin such as a phenol-based resin, or flame retardant treatment with a phosphorus-based or other flame retardant.

The bulk density of the sound-absorbing base material to be used in a composite sound-absorbing material used as the skin material of this embodiment is preferably 0.01 g/cm$^3$ to 0.1 g/cm$^3$, more preferably 0.02 g/cm$^3$ to 0.08 g/cm$^3$ and even more preferably 0.03 g/cm$^3$ to 0.05 g/cm$^3$. If the bulk density is 0.01 g/cm$^3$ or greater, the sound absorption property will be unlikely to be reduced and there will be no need to increase the thickness beyond the necessary level. If the bulk density is 0.1 g/cm$^3$ or lower, sounds passing through the nonwoven fabric skin material will readily infiltrate into the open-cell resin foam, and the abrasion resistance and workability will be improved.

The sound-absorbing base material preferably has the specified bulk density in order to form a composite sound-absorbing material that has a high sound absorption property while also having a small thickness and light weight, and excellent shape stability, by combining a sound-absorbing base material and a skin material as described above. The bulk density of the sound-absorbing base material can be adjusted by compression adjustment with a known hot press machine before combination with a nonwoven fabric or layered nonwoven fabric, or by compression adjustment during integral molding with the sound-absorbing base material after a synthetic fiber nonwoven fabric has been layered by thermoforming in a vehicle member.

The thickness of the sound-absorbing base material is preferably between 5 mm and 50 mm and more preferably 10 mm to 40 mm. If the thickness is 5 mm or greater the sound absorption property will be adequate, and the sound absorption coefficient for low frequencies in particular will be less likely to be lowered. If the thickness is 50 mm or smaller, the size of the sound-absorbing material will not excessively increase and the laminating workability, handleability and product transportability will be improved.

Examples of materials for sound-absorbing base materials include open-cell resin foams made of polyethylene resin, polypropylene resin, polyurethane resin, polyester resin, acrylic resin, polystyrene resin or melamine resin; sound-absorbing synthetic fiber nonwoven fabrics obtained by layering polyolefin-based fibers such as polyethylene, polypropylene and copolymerized polypropylene, polyamide-based fibers such as nylon 6, nylon 66 and copolymerized polyamide, polyester-based fibers such as polyethylene terephthalate, polybutylene terephthalate, copolymerized polyesters and aliphatic polyesters, composite fibers with a core-sheath structure comprising a combination of polyethylene, polypropylene or copolymerized polyester as the sheath and polypropylene or polyester as the core, or biodegradable fibers such as polylactic acid, polybutylene succinate or polyethylene succinate, with staple fibers or with staple fibers and long fibers, and tangling them by a needle punching method; and felt. Examples of inorganic materials include glass fibers and glass wool.

An open-cell resin foam is preferably made of a melamine resin or urethane resin from the viewpoint of lightweight properties and sound absorption properties, and a sound-absorbing synthetic fiber nonwoven fabric is preferably made of polyester-based fibers from the viewpoint of flame retardance.

A composite sound-absorbing material using the skin material of this embodiment can be obtained by integrally joining the aforementioned nonwoven fabric or layered nonwoven fabric with a sound-absorbing base material having a coarse structure. Joining between the skin material and sound-absorbing base material may be by a method of insert heat-fusing fibers between the bonding surfaces, or a method of applying a hot-melt resin or bonding agent.

In a bonding method using a bonding agent, a hot-melt adhesive is applied onto the nonwoven fabric skin material by a curtain spray system, dot system or screen system at 2 g/m$^2$ to 30 g/m$^2$ and heated from the nonwoven fabric skin material side for softening and melting of the coated bonding agent, to allow bonding.

The adhesive force between the skin material and sound-absorbing base material is preferably 0.1 N/10 mm or greater, and more preferably 0.2 N/10 mm to 5 N/10 mm. If the adhesive force is 0.1 N/10 mm or greater there will tend to be fewer problems such as detachment during cutting and transport of the sound-absorbing material. In order to obtain high adhesive force it is preferred to provide a low-melting-point component layer on the bonding surface of the nonwoven fabric skin material, and preferably a hot-melt bonding agent is coated onto the open-cell resin foam or fiber porous material.

For a composite sound-absorbing material obtained by coating a 10 mm-thick continuous melamine resin foam "Basotect TG" by BASF Corp. with copolymerized polyester-based hot-melt powder (melting point: 130°C) to 20 g/m$^2$, layering it with a nonwoven fabric either before or after simultaneous biaxial stretching and joining them by heat treatment, when the typical frequencies of 1000 Hz, 1600 Hz, 2000 Hz, 2500 Hz, 3150 Hz, 4000 Hz and 6300 Hz according to JIS-1405 are measured using a normal incidence measuring device (Type4206T by Bruel & Kjar Co.), placed so as to be incident from the skin material side, and the mean sound absorption coefficient is calculated to determine the mean sound absorption coefficient (%) before simultaneous biaxial stretching and the mean sound absorption coefficient (%)

after simultaneous biaxial stretching, the nonwoven fabric of this embodiment has a difference in sound absorption coefficient before and after simultaneous biaxial stretching (before stretching) of preferably less than 15%, more preferably 13% or more and even more preferably 11% or more. The effect of the sound absorption coefficient can be evaluated as follows.

G: Difference of less than 15% in mean sound absorption coefficient before and after simultaneous biaxial stretching.
P: Difference of 15% or more in mean sound absorption coefficient before and after simultaneous biaxial stretching.

A composite sound-absorbing material using the layered nonwoven fabric of this embodiment may be one with a contributing effect for sound absorption that is preferably 45% or greater, more preferably 50% or greater and even more preferably 55% or greater, as determined by the following formula from the mean sound absorption coefficient A at frequencies of 1000 Hz, 1600 Hz, 2000 Hz, 2500 Hz, 3150 Hz and 4000 Hz, in measurement of normal incidence according to JIS-1405.
The contributing effect for sound absorption (%) is calculated by the following formula:

$$\text{Sound absorption-contributing effect } (\%) = A - A0$$

{where A is the mean sound absorption coefficient A (%) for the composite sound-absorbing material and A0 is the mean sound absorption coefficient A (%) for the sound-absorbing base material alone}.

EXAMPLES

The present invention will now be explained in more specific detail through the following Examples and Comparative Examples, with the understanding that the invention is in no way limited thereby. The direction of flow during production of a nonwoven fabric (the machine direction) is referred to as the MD direction, and the width direction which is the direction perpendicular to that direction is referred to as the CD direction.
The physical properties for the Examples were obtained using the following methods.

(1) Glass transition point temperature and melting point (°C) of thermoplastic resin component

A 5 mg sample of each thermoplastic resin is taken, and a differential scanning calorimeter (Q100 by TA Instruments) is used to determine the glass transition point temperature as the temperature at the exothermic peak point and the melting point as the temperature at the endothermic peak point, with temperature increase from 20°C to 290°C at 10°C/min under a nitrogen atmosphere.

(2) Basis weight (g/m$^2$)

Determined according to JIS-1913.

(3) Mean fiber diameter ($\mu$m)

A VHX-700F microscope by Keyence Corp. is used to take a 500x-magnified photograph, and the average value for 10 fibers within the focus of the observation field is determined.

(4) Apparent density (g/cm$^3$)

The ratio (basis weight)/(thickness) is calculated, and the weight per unit volume is determined.

(5) Thickness (mm)

This was determined according to JIS L 1913 B. The thickness under a pressure load of 0.02 kPa was measured at 3 or more locations, and the average value was determined. The thickness of the nonwoven fabric skin material was measured under a load of 20 kPa.

(6) Birefringence ($\Delta$n)

Yarn is sampled from the conveyor during the nonwoven fabric production process, and a Model BH2 polarizing microscope compensator by Olympus Corp. is used to determine the birefringence from the retardation and fiber size, based on the common interference pattern method. The average value for 10 fibers is calculated.

(7) Distance between ultrafine fiber layers (M) ($\mu$m)

After embedding the layered nonwoven fabric with an epoxy resin, an ultramicrotome was used to expose a cross-section perpendicular to the planar direction of the layered nonwoven fabric, a scanning electron microscope (VE-8800) by Keyence Corp. was used to take a cross-sectional photograph in the layered nonwoven fabric at 500x magnification, and then the distance between ultrafine fiber layers (M) was measured at 10 arbitrary points and the average value was calculated. In the case of ultrasonic welding, the measurement is made at non-welded parts.

(8) Biaxial stretching evaluation

A 26 cm $\times$ 26 cm test piece is sampled, and a biaxial stretching machine (EX10-III) is used for simultaneous biaxial stretching by 9.94 cm in both the MD direction and CD direction at a stretching speed of 1000 m/min, after preheating for 90 seconds in an atmosphere of 150°C, with a grip length of 24 cm $\times$ 24 cm (an area development rate of 200% is an area of 200% after stretching, where 100% is the original area), and the maximum stress in the MD direction and CD direction at that time is measured (average value for n = 3). The stretched sample is visually examined and evaluated on the following scale:

G: No torn sections or visible stretch irregularity (stretch marks, stretch ununiformity)
F: Visible stretch irregularity
P: Torn sections or defects in ultrafine fiber layer.

(9) Air permeability: Measured by the Frazier method described in JIS-L-1906.

(10) Abrasion resistance (fluff grade) [level]

A "Gakushin Color Fastness/Rubbing Tester" by Daiei Kagaku Seiki Mfg. Co., Ltd. is used with the nonwoven fabric as the sample and a #3 cotton fabric as the rubbing cloth for friction with a load of 500 gf and 100 abrasion strokes, and the fluff generation and condition of wear on the nonwoven fabric surface is visually assessed on the following scale (average value for n = 5):

Level 0: Large damage
Level 1: Medium damage
Level 2: Small damage
Level 3: No damage, low fluff generation
Level 4: No damage, very low fluff generation
Level 5: No damage, no fluff

(11) Bulk density of ultrafine fiber layer (g/cm3)

A sample of the nonwoven fabric cut perpendicular to the planar direction is prepared, a scanning electron microscope (VE-8800) by Keyence Corp. is used to take a cross-sectional photograph of a non-contact-bonded section in the integrally thermocompression-bonded nonwoven fabric at 500x magnification, the thickness of the ultrafine fiber layer is measured at 10 arbitrary points, and the average value is calculated. The average basis weight of the ultrafine fiber layer is divided by the thickness of the ultrafine fiber layer. When the basis weight cannot be calculated using the ultrafine fiber layer alone, an X-ray CT image of the nonwoven fabric may be taken using a nano3DX High-Resolution 3D X-Ray Microscope (Rigaku), and the bulk density and basis weight can be calculated from the area of the observed region, the volume occupied by the ultrafine fiber layer, the resin density and the thickness, based on the X-ray CT image.

(12) 180°C Dry heat shrinkage (%)

Using a hot air oven (HIGH-TEMP OVEN PHH-300 by Espec Corp.), three 10-cm points of the sample are exposed at 180°C $\times$ 30 minutes under a hot air atmosphere, and the area shrinkage factor (%) of the nonwoven fabric is measured.

(13) Mean sound absorption coefficient A (%)

Using a normal incidence measuring device (Type4206T by Bruel & Kjar Co.) according to JIS A 1405, the sound absorption coefficient (%) was measured at the typical frequencies of 1000 Hz, 1600 Hz, 2000 Hz, 2500 Hz, 3150 Hz, 4000 Hz, 5000 Hz and 6300 Hz. The base material used was fabricated as described in the Examples and Comparative Examples. The average sound absorption coefficient for the frequencies of 1000 Hz, 1600 Hz, 2000 Hz, 2500 Hz, 3150 Hz and 4000 Hz was recorded as the mean sound absorption coefficient A (%).

(14) Mean sound absorption coefficient (%) before and after simultaneous biaxial stretching

For a composite sound-absorbing material obtained by coating a 10 mm-thick continuous melamine resin foam "Basotect TG" by BASF Corp. with copolymerized polyester-based hot-melt powder (melting point: 130°C) to 20 g/m$^2$, layering it with nonwoven fabrics before and after simultaneous biaxial stretching and joining them by heat treatment, when the typical frequencies of 1000 Hz, 1600 Hz, 2000 Hz, 2500 Hz, 3150 Hz, 4000 Hz and 6300 Hz according to JIS-1405 are measured using a normal incidence measuring device (Type4206T by Bruel & Kjar Co.), placed so as to be incident from the skin material side, the mean sound absorption coefficient was calculated to determine the mean sound absorption coefficient (%) before simultaneous biaxial stretching and the mean sound absorption coefficient (%) after simultaneous biaxial stretching. The difference in mean sound absorption coefficient before and after simultaneous biaxial stretching is evaluated on the following scale:

G: Difference in mean sound absorption coefficient before and after simultaneous biaxial stretching of less than 15%.
P: Difference in mean sound absorption coefficient before and after simultaneous biaxial stretching of 15% or greater.

[Example 1]

A polyethylene terephthalate (PET) resin having a melting point of 265°C was supplied to a regular melt spinning apparatus, melted at 300°C and discharged through a spinning nozzle having a spinning hole with a circular cross-section, and a high-speed airflow traction device was used to cool the yarn with an air jet while stretching at a spinning speed of 3700 m/min, to form a fiber web (S1) (basis weight: 20.8 g/m$^2$, mean fiber diameter: 15.0 $\mu$m) on a meshed net. Polyethylene terephthalate (solution viscosity $\eta$sp/c: 0.50, melting point: 260°C) was directly ejected onto the obtained continuous filament web (S1) from a melt blow nozzle, under conditions with a spinning temperature of 300°C, heated air at 320°C and 1000 Nm$^3$/hr, to form an ultrafine fiber web (M) (basis weight: 8.4 g/m$^2$, mean fiber diameter: 1.7 $\mu$m). During this step, the distance from the melt blow nozzle to the continuous long fiber layer was 110 mm, and the suction wind speed at the collecting surface directly under the melt blow nozzle was set to 7 m/sec. A continuous filament web (S2) of polyethylene terephthalate was also formed on the obtained ultrafine fiber web, in the same manner as the fiber web (S1). The obtained layered web was then subjected to thermocompression bonding with a calender linear pressure of 30 N/mm, using a flat roll and an IL pattern embossing roll designed for a thermocompression bonded-section area ratio during thermocompression bonding of 11.4%, and distances of 3.0 mm between thermocompression bonded sections in the MD direction and distances of 2.8 mm between thermocompression bonded sections in the CD direction, with the surface temperature of the embossing roll at 190°C and the surface temperature of the flat roll at 190°C, to obtain a nonwoven fabric having a basis weight of 50 g/m$^2$ and a bulk density of 0.22 g/cm$^3$. The physical properties of the obtained nonwoven fabric are shown in Table 1.

[Example 2]

A nonwoven fabric was obtained in the same manner as Example 1, except that the spinning speed for fabrication of the continuous filament webs (S1, S2) was 3550 m/min, the fiber diameter was 15.3 $\mu$m for each, the surface temperature of the embossing roll was 185°C and the surface temperature of the flat roll was 185°C. The physical properties of the obtained nonwoven fabric are shown in Table 1.

[Example 3]

A nonwoven fabric was obtained in the same manner as Example 2, except that the thermocompression bonded-section area ratio was 14.4%, and an embossing roll with a weave texture pattern was used so that the distances between thermocompression bonded sections in the MD direction was 0.7 mm and the distances between thermocompression bonded sections in the CD direction was 0.7 mm. The physical properties of the obtained nonwoven fabric are shown in Table 1.

[Example 4]

A nonwoven fabric was obtained in the same manner as Example 2, except that polyethylene terephthalate (solution viscosity ηsp/c: 0.50, melting point: 260°C) was directly ejected from a melt blow nozzle under conditions with a spinning temperature of 320°C, heated air at 360°C and 1200 Nm$^3$/hr, to form an ultrafine fiber web (M) (basis weight: 8.4 g/m$^2$, mean fiber diameter: 0.8 μm), with the distance from the melt blow nozzle to the continuous long fiber layer set to 120 mm. The physical properties of the obtained nonwoven fabric are shown in Table 1.

[Table 1]

Table 1

| | | Example | | | |
|---|---|---|---|---|---|
| | | 1 | 2 | 3 | 4 |
| Upper layer (S1) | Component A starting material | PET | PET | PET | PET |
| | Spinning speed (m/min) | 3700 | 3550 | 3550 | 3550 |
| | Birefringence | 0.052 | 0.042 | 0.042 | 0.042 |
| | Fiber diameter (μm) | 15 | 15.3 | 15.3 | 15.3 |
| | Basis weight (g/m$^2$) | 20.8 | 20.8 | 20.8 | 20.8 |
| Middle layer (M) | Resin type | PET | PET | PET | PET |
| | Fiber diameter (μm) | 1.7 | 1.7 | 1.7 | 0.8 |
| | Basis weight (g/m$^2$) | 8.4 | 8.4 | 8.4 | 8.4 |
| Lower layer (S2) | Resin type | PET | PET | PET | PET |
| | Spinning speed (m/min) | 3700 | 3550 | 3550 | 3550 |
| | Birefringence | 0.052 | 0.042 | 0.042 | 0.042 |
| | Fiber diameter (μm) | 15 | 15.3 | 15.3 | 15.3 |
| | Basis weight (g/m$^2$) | 20.8 | 20.8 | 20.8 | 20.8 |
| Total basis weight (g/m$^2$) | | 50 | 50 | 50 | 50 |
| Embossing area ratio (%) | | 11.4 | 11.4 | 14.4 | 11.4 |
| Emboss pattern | | IL | IL | Weave texture | IL |
| Distance between contact-bonded sections (mm) | Machine direction | 3 | 3 | 0.7 | 3 |
| | Widthwise direction | 2.8 | 2.8 | 0.7 | 2.8 |
| Calender temperature (°C) | Upper (embossing roll) | 190 | 185 | 185 | 185 |
| | Lower (flat roll) | 190 | 185 | 185 | 185 |
| Calender pressure (N/mm) | | 30 | 30 | 30 | 30 |
| Thickness (mm) | | 0.23 | 0.23 | 0.18 | 0.23 |
| Apparent density (g/cm$^3$) | | 0.22 | 0.22 | 0.28 | 0.22 |
| Middle layer (M) | Thickness (μm) | 19.8 | 19.8 | 18.0 | 18.0 |
| | Bulk density (g/cm$^3$) | 0.42 | 0.42 | 0.47 | 0.47 |
| Air permeability (cc/cm$^2$/sec) | | 28 | 27 | 12.5 | 7 |

(continued)

| | | Example | | | |
|---|---|---|---|---|---|
| | | 1 | 2 | 3 | 4 |
| Fluff grade | Embossing roll surface | 3.3 | 3.5 | 3.7 | 3.5 |
| | Flat roll surface | 3.4 | 3.8 | 3.9 | 3.8 |
| | Fluff grade difference | 0.1 | 0.3 | 0.2 | 0.3 |
| 180°C Drv heat contraction (%) | | 2.5 | 3.2 | 3.0 | 3.1 |
| Stress during biaxial stretching (150°C, 200% area development rate) | MD | 24.3 | 28.1 | 30.5 | 27.5 |
| | CD | 13.3 | 10 | 10.8 | 9.9 |
| | MD+CD | 48 | 38 | 41 | 37 |
| State of fabric after biaxial stretching | | G | G | G | G |
| Air permeability after biaxial stretching (cc/cm$^2$/sec) | | 59 | 53 | 30 | 16 |
| Increase in air permeability before and after biaxial stretching | | 211% | 196% | 240% | 229% |
| Sound absorption evaluation (%) | Mean sound absorption coefficient before stretching (%) | 59 | 60 | 55 | 58 |
| | Mean sound absorption coefficient after stretching (%) | 48 | 52 | 60 | 53 |
| | Evaluation | G | G | G | G |

[Example 5]

A nonwoven fabric was obtained in the same manner as Example 2, except that the basis weights of the continuous filament webs (S1, S2) were both 20.0 g/m$^2$, polyethylene terephthalate (solution viscosity ηsp/c: 0.50, melting point: 260°C) was directly ejected from a melt blow nozzle under conditions with a spinning temperature of 330°C, heated air at 370°C and 1300 Nm$^3$/hr, to form an ultrafine fiber web (M) (basis weight: 30.0 g/m$^2$, mean fiber diameter: 0.8 μm), with the distance from the melt blow nozzle to the continuous long fiber layer set to 140 mm, and the suction wind speed on the collecting surface was set to 11 m/sec. The physical properties of the obtained nonwoven fabric are shown in Table 2.

[Example 6]

A nonwoven fabric was obtained in the same manner as Example 2, except that the basis weights of the continuous filament webs (S1, S2) were both 15.3 g/m$^2$, and the basis weight of the ultrafine fiber web (M) was 9.4 g/m$^2$. The physical properties of the obtained nonwoven fabric are shown in Table 2.

[Example 7]

A polyethylene terephthalate resin (solution viscosity ηsp/c: 0.77, measured at 1%, 25°C using orthochlorophenol, melting point: 263°C) was supplied to a regular melt spinning apparatus, melted at 300°C and discharged through a spinning nozzle having a spinning hole with a circular cross-section, and a high-speed airflow traction device was used to cool the yarn with an air jet while stretching at a spinning speed of 3550 m/min, to form a fiber web (S1) (basis weight: 15.3 g/m$^2$, mean fiber diameter: 15.3 μm) on a meshed net. Polyethylene terephthalate (solution viscosity ηsp/c: 0.50, melting point: 260°C) was directly ejected onto the obtained continuous filament web (S1) from a melt blow nozzle, under conditions with a spinning temperature of 300°C, heated air at 320°C and 1000 Nm$^3$/hr, to form an ultrafine fiber web (M) (basis weight: 9.4 g/m$^2$, mean fiber diameter: 1.7 μm). During this step, the distance from the melt blow nozzle to the continuous long fiber layer was 110 mm, and the suction wind speed at the collecting surface directly under the melt blow nozzle was set to 7 m/sec. Next, a two-component spinning nozzle was used to form a continuous filament web (S2) (15.3 g/m$^2$, mean fiber diameter: 15.3 μm) having a copolymerized polyester resin (melting point: 160°C) as the sheath component and a polyethylene terephthalate resin (melting point: 263°C) as the core component. The obtained layered web was then subjected to thermocompression bonding with a calender linear pressure of 30 N/mm, using a flat roll and an IL pattern embossing roll designed for a thermocompression bonded-section area ratio during thermocompression bonding of 11.4%, and distances of 3.0 mm between thermocompression bonded sections in the MD direction and distances of 2.8 mm between thermocompression bonded sections in the CD direction, with the surface temperature of the embossing roll at 185°C and the surface temperature of the flat roll at 120°C, to obtain a nonwoven fabric having a basis weight of 40 g/m$^2$ and a bulk density of 0.22 g/cm$^3$. The physical properties of the obtained nonwoven fabric are shown in Table 2.

[Table 2]

Table 2

| | | | Example | | |
|---|---|---|---|---|---|
| | | | 5 | 6 | 7 |
| Upper layer (S1) | | Component A starting material | PET | PET | PET |
| | | Spinning speed (m/min) | 3550 | 3550 | 3550 |
| | | Birefringence | 0.042 | 0.042 | 0.042 |
| | | Fiber diameter ($\mu$m) | 15.3 | 15.3 | 15.3 |
| | | Basis weight (g/m$^2$) | 20 | 15.3 | 15.3 |
| Middle layer (M) | | Resin type | PET | PET | PET |
| | | Fiber diameter ($\mu$m) | 0.8 | 1.7 | 1.7 |
| | | Basis weight (g/m$^2$) | 30 | 9.4 | 9.4 |
| Lower layer (S2) | | Resin type | PET | PET | PET/ CoPET |
| | | Spinning speed (m/min) | 3550 | 3550 | 3550 |
| | | Birefringence | 0.042 | 0.042 | 0.042 |
| | | Fiber diameter ($\mu$m) | 15.3 | 15.3 | 15.3 |
| | | Basis weight (g/m$^2$) | 20 | 15.3 | 15.3 |
| Total basis weight (g/m$^2$) | | | 70 | 40 | 40 |
| Embossing area ratio (%) | | | 11.4 | 11.4 | 11.4 |
| Emboss pattern | | | IL | IL | IL |
| Distance between contact-bonded sections (mm) | | Machine direction | 3 | 3 | 3 |
| | | Widthwise direction | 2.8 | 2.8 | 2.8 |
| Calender temperature (°C) | | Upper (embossing roll) | 185 | 185 | 185 |
| | | Lower (flat roll) | 185 | 185 | 120 |
| Calender pressure (N/mm) | | | 30 | 30 | 30 |
| Thickness (mm) | | | 0.3 | 0.18 | 0.18 |
| Apparent density (g/cm$^3$) | | | 0.23 | 0.22 | 0.22 |
| Middle layer (M) | | Thickness ($\mu$m) | 50.0 | 20.0 | 21.0 |
| | | Bulk density (g/cm$^3$) | 0.60 | 0.47 | 0.45 |
| Air permeability (cc/cm$^2$/sec) | | | 2 | 28 | 27 |
| Fluff grade | | Embossing roll surface | 3.7 | 3.6 | 3.6 |
| | | Flat roll surface | 3.8 | 3.9 | 4 |
| | | Fluff grade difference | 0.1 | 0.3 | 0.4 |

(continued)

| | | Example | | |
|---|---|---|---|---|
| | | 5 | 6 | 7 |
| 180°C Dry heat contraction (%) | | 2.5 | 3.4 | 4.1 |
| Stress during biaxial stretching (150°C, 200% area development rate) | MD | 38.1 | 22.2 | 23.8 |
| | CD | 13.46 | 7.6 | 8.2 |
| | MD+CD | 52 | 30 | 32 |
| State of fabric after biaxial stretching | | G | G | G |
| Air permeability after biaxial stretching (cc/cm$^2$/sec) | | 4.5 | 56 | 57 |
| Increase in air permeability before and after biaxial stretching | | 225% | 200% | 211% |
| Sound absorption evaluation (%) | Mean sound absorption coefficient before stretching (%) | 54 | 59 | 60 |
| | Mean sound absorption coefficient after stretching (%) | 53 | 49 | 49 |
| | Evaluation | G | G | G |

[Example 8]

A mixture obtained by dry blending 98.5 wt% of a polyethylene terephthalate (PET) resin with a melting point of 265°C and 1.5 wt% of an acrylate resin (methacrylic acid-acrylic acid binary copolymer, Product No. 80N) by Asahi Kasei Corp. was supplied to a regular melt spinning apparatus, melted at 300°C and discharged through a spinning nozzle having a spinning hole with a circular cross-section, and a high-speed airflow traction device was used to cool the yarn with an air jet while stretching at a spinning speed of 4500 m/min, to form a fiber web (S1) (basis weight: 20.8 g/m$^2$, mean fiber diameter: 13.6 $\mu$m) on a meshed net. Polyethylene terephthalate (solution viscosity $\eta$sp/c: 0.50, melting point: 260°C) was directly ejected onto the obtained continuous filament web (S1) from a melt blow nozzle, under conditions with a spinning temperature of 300°C, heated air at 320°C and 1000 Nm$^3$/hr, to form an ultrafine fiber web (M) (basis weight: 8.4 g/m$^2$, mean fiber diameter: 1.7 $\mu$m). During this step, the distance from the melt blow nozzle to the continuous long fiber layer was 110 mm, and the suction wind speed at the collecting surface directly under the melt blow nozzle was set to 7 m/sec. A continuous filament web (S2) of polyethylene terephthalate was also formed on the obtained ultrafine fiber web, in the same manner as the fiber web (S1). The obtained layered web was then subjected to thermocompression bonding with a calender linear pressure of 30 N/mm, using a flat roll and an IL pattern embossing roll designed for a thermocompression bonded-section area ratio during thermocompression bonding of 11.4%, and distances of 3.0 mm between thermocompression bonded sections in the MD direction and distances of 2.8 mm between thermocompression bonded sections in the CD direction, with the surface temperature of the embossing roll at 200°C and the surface temperature of the flat roll at 200°C, to obtain a nonwoven fabric having a basis weight of 50 g/m$^2$ and a bulk density of 0.22 g/cm$^3$. The physical properties of the obtained nonwoven fabric are shown in Table 3.

[Example 9]

A mixture obtained by dry blending 99 wt% of a polyethylene terephthalate resin (solution viscosity $\eta$sp/c: 0.77, measured at 1%, 25°C using orthochlorophenol, melting point: 263°C) and 1.0 wt% of a methacrylate resin (styrene-methacrylic acid-cyclohexylmaleimide polymer, Product No. PM130N) by Asahi Kasei Corp. was supplied to a regular melt spinning apparatus, melted at 300°C and discharged through a spinning nozzle having a spinning hole with a circular cross-section, and a high-speed airflow traction device was used to cool the yarn with an air jet while stretching at a spinning speed of 4500 m/min, to form a fiber web (S1) (basis weight: 20.8 g/m$^2$, mean fiber diameter: 13.6 $\mu$m) on a meshed net. Polyethylene terephthalate (solution viscosity $\eta$sp/c: 0.50, melting point: 260°C) was directly ejected onto the obtained continuous filament web (S1) from a melt blow nozzle, under conditions with a spinning temperature of 300°C, heated air at 320°C and 1000 Nm$^3$/hr, to form an ultrafine fiber web (M) (basis weight: 8.4 g/m$^2$, mean fiber diameter: 1.7 $\mu$m). During this step, the distance from the melt blow nozzle to the continuous long fiber layer was 110 mm, and the suction wind speed at the collecting surface directly under the melt blow nozzle was set to 7 m/sec. A continuous filament web (S2) of polyethylene terephthalate was also formed on the obtained ultrafine fiber web, in the same manner as the fiber web (S1). The obtained layered web was then subjected to thermocompression bonding with a calender linear pressure of 30 N/mm, using a flat roll and an IL pattern embossing roll designed for a thermocompression bonded-section area ratio during thermocompression bonding of 11.4%, and distances of 3.0 mm between thermocompression bonded sections in the MD direction and distances of 2.8 mm between thermocompression bonded sections in the CD direction, with the surface temperature of the embossing roll at 185°C and the surface temperature of the flat roll at 185°C, to obtain a nonwoven fabric having a basis weight of 50 g/m$^2$ and a bulk density of 0.22 g/cm$^3$. The physical properties of the obtained nonwoven fabric are shown in Table 3.

[Example 10]

A nonwoven fabric was obtained in the same manner as Example 9, except that the thermocompression bonded-section area ratio was 14.4%, and an embossing roll with a weave texture pattern was used so that the distances between thermocompression bonded sections in the MD direction was 0.7 mm and the distances between thermocompression bonded sections in the CD direction was 0.7 mm. The physical properties of the obtained nonwoven fabric are shown in Table 3.

[Example 11]

A nonwoven fabric was obtained in the same manner as Example 9, except that polyethylene terephthalate (solution viscosity $\eta$sp/c: 0.50, melting point: 260°C) was directly ejected from a melt blow nozzle under conditions with a spinning temperature of 320°C, heated air at 360°C and 1200 Nm$^3$/hr, to form an ultrafine fiber web (M) (basis weight: 8.4 g/m$^2$, mean fiber diameter: 0.8 $\mu$m), with the distance from the melt blow nozzle to the continuous long fiber layer set to 120 mm. The physical properties of the obtained nonwoven fabric are shown in Table 3.

[Table 3]

Table 3

| | | Example | | | |
|---|---|---|---|---|---|
| | | 8 | 9 | 10 | 11 |
| Upper layer (S1) | Component A starting material | PET | PET | PET | PET |
| | Component B starting material | 80N | PM130N | PM130N | PM130N |
| | Component B glass transition point (°C) | 114 | 128 | 128 | 128 |
| | Component B addition (wt%) | 1.5 | 1 | 1 | 1 |
| | Spinning speed (m/min) | 4500 | 4500 | 4500 | 4500 |
| | Birefringence | 0.042 | 0.041 | 0.041 | 0.041 |
| | Fiber diameter ($\mu$m) | 13.6 | 13.6 | 13.6 | 13.6 |
| | Basis weight (g/m$^2$) | 20.8 | 20.8 | 20.8 | 20.8 |
| Middle layer (M) | Resin type | PET | PET | PET | PET |
| | Fiber diameter ($\mu$m) | 1.7 | 1.7 | 1.7 | 0.8 |
| | Basis weight (g/m$^2$) | 8.4 | 8.4 | 8.4 | 8.4 |

(continued)

| | | Example | | | |
|---|---|---|---|---|---|
| | | 8 | 9 | 10 | 11 |
| Lower layer (S2) | Component A starting material | PET | PET | PET | PET |
| | Component B starting material | 80N | PM130N | PM130N | PM130N |
| | Component B glass transition point (°C) | 114 | 128 | 128 | 128 |
| | Component B addition (wt%) | 1.5 | 1 | 1 | 1 |
| | Spinning speed (m/min) | 4500 | 4500 | 4500 | 4500 |
| | Birefringence | 0.042 | 0.041 | 0.041 | 0.041 |
| | Fiber diameter ($\mu$m) | 13.6 | 13.6 | 13.6 | 13.6 |
| | Basis weight (g/m$^2$) | 20.8 | 20.8 | 20.8 | 20.8 |
| Total basis weight (g/m$^2$) | | 50 | 50 | 50 | 50 |
| Embossing area ratio (%) | | 11.4 | 11.4 | 14.4 | 11.4 |
| Emboss pattern | | IL | IL | Weave texture | IL |
| Distance between contact-bonded sections (mm) | Machine direction | 3 | 3 | 0.7 | 3 |
| | Widthwise direction | 2.8 | 2.8 | 0.7 | 2.8 |
| Calender temperature (°C) | Upper (embossing roll) | 185 | 185 | 185 | 185 |
| | Lower (flat roll) | 185 | 185 | 185 | 185 |
| Calender pressure (N/mm) | | 30 | 30 | 30 | 30 |
| Thickness (mm) | | 0.23 | 0.23 | 0.18 | 0.23 |
| Apparent density (g/cm3) | | 0.22 | 0.22 | 0.28 | 0.22 |
| Middle layer (M) | Thickness ($\mu$m) | 19.8 | 19.8 | 18.0 | 18.0 |
| | Bulk density (g/cm$^3$) | 0.42 | 0.42 | 0.47 | 0.47 |
| Air permeability (cc/cm$^2$/sec) | | 27 | 25 | 12.5 | 7 |
| Fluff grade | Embossing roll surface | 3.5 | 3.6 | 4 | 3.9 |
| | Flat roll surface | 3.8 | 3.9 | 4 | 4 |
| | Fluff grade difference | 0.3 | 0.3 | 0 | 0.1 |
| 180°C Dry heat contraction (%) | | 2.5 | 2.4 | 2.3 | 2.3 |
| Stress during biaxial stretching (150°C, 200% area development rate) | MD | 28.1 | 27.3 | 27.8 | 26.5 |
| | CD | 10 | 9.3 | 9.8 | 8.9 |
| | MD+CD | 38 | 37 | 38 | 35 |
| State of fabric after biaxial stretching | | G | G | G | G |
| Air permeability after biaxial stretching (cc/cm$^2$/sec) | | 57 | 51 | 30 | 14 |
| Increase in air permeability before and after biaxial stretching | | 211% | 204% | 240% | 200% |
| Sound absorption evaluation (%) | Mean sound absorption coefficient before stretching (%) | 60 | 61 | 56 | 59 |
| | Mean sound absorption coefficient after stretching (%) | 49 | 53 | 60 | 54 |
| | Evaluation | G | G | G | G |

[Example 12]

A nonwoven fabric was obtained in the same manner as Example 9, except that the basis weights of the continuous filament webs (S1, S2) were both 20.0 g/m$^2$, polyethylene terephthalate (solution viscosity $\eta$sp/c: 0.50, melting point: 260°C) was directly ejected from a melt blow nozzle under conditions with a spinning temperature of 330°C, heated air at 370°C and 1300 Nm$^3$/hr, to form an ultrafine fiber web (M) (basis weight: 30.0 g/m$^2$, mean fiber size: 0.8 $\mu$m), with the distance from the melt blow nozzle to the continuous long fiber layer set to 140 mm, and the suction wind speed on the collecting surface was set to 11 m/sec. The physical properties of the obtained nonwoven fabric are shown in Table 4.

[Example 13]

A nonwoven fabric was obtained in the same manner as Example 9, except that the basis weights of the continuous filament webs (S1, S2) were both 15.3 g/m$^2$, and the basis weight of the ultrafine fiber web (M) was 9.4 g/m$^2$. The physical properties of the obtained nonwoven fabric are shown in Table 4.

[Example 14]

A mixture obtained by dry blending 99 wt% of a polyethylene terephthalate resin (solution viscosity $\eta$sp/c: 0.77, measured at 1%, 25°C using orthochlorophenol, melting point: 263°C) and 1.0 wt% of a methacrylate resin (styrene-methacrylic acid-cyclohexylmaleimide polymer, Product No. PM130N) by Asahi Kasei Corp. was supplied to a regular melt spinning apparatus, melted at 300°C and discharged through a spinning nozzle having a spinning hole with a circular cross-section, and a high-speed airflow traction device was used to cool the yarn with an air jet while stretching at a spinning speed of 4500 m/min, to form a fiber web (S1) (basis weight: 15.3 g/m$^2$, mean fiber diameter: 13.6 $\mu$m) on a meshed net. Polyethylene terephthalate (solution viscosity $\eta$sp/c: 0.50, melting point: 260°C) was directly ejected onto the obtained continuous filament web (S1) from a melt blow nozzle, under conditions with a spinning temperature of 300°C, heated air at 320°C and 1000 Nm$^3$/hr, to form an ultrafine fiber web (M) (basis weight: 9.4 g/m$^2$, mean fiber diameter: 1.7 $\mu$m). During this step, the distance from the melt blow nozzle to the continuous long fiber layer was 110 mm, and the suction wind speed at the collecting surface directly under the melt blow nozzle was set to 7 m/sec. Next, a two-component spinning nozzle was used to form a continuous filament web (S2) (basis weight: 15.3 g/m$^2$, mean fiber diameter: 13 $\mu$m), comprising 99 wt% of a copolymerized polyester resin (melting point: 160°C) and 1.0 wt% of a methacrylate resin (styrene-methacrylic acid-cyclohexylmaleimide polymer, Product No. PM130N) by Asahi Kasei Corp., as the sheath component, and 99 wt% of a polyethylene terephthalate resin (melting point: 263°C) and 1.0 wt% of a methacrylate resin (styrene-methacrylic acid-cyclohexylmaleimide polymer, Product No. PM130N) by Asahi Kasei Corp., as the core component. The obtained layered web was then subjected to thermocompression bonding with a calender linear pressure of 30 N/mm, using a flat roll and an IL pattern embossing roll designed for a thermocompression bonded-section area ratio during thermocompression bonding of 11.4%, and distances of 3.0 mm between thermocompression bonded sections in the MD direction and distances of 2.8 mm between thermocompression bonded sections in the CD direction, with the surface temperature of the embossing roll at 185°C and the surface temperature of the flat roll at 120°C, to obtain a nonwoven fabric having a basis weight of 40 g/m$^2$ and a bulk density of 0.22 g/cm$^3$. The physical properties of the obtained nonwoven fabric are shown in Table 4.

[Table 4]

Table 4

| | | Example | | |
|---|---|---|---|---|
| | | 12 | 13 | 14 |
| Upper layer (S1) | Component A starting material | PET | PET | PET |
| | Component B starting material | PM130N | PM130N | PM130N |
| | Component B glass transition point (°C) | 128 | 128 | 128 |
| | Component B addition (wt%) | 1 | 1 | 1 |
| | Spinning speed (m/min) | 4500 | 4500 | 4500 |
| | Birefringence | 0.041 | 0.041 | 0.040 |
| | Fiber diameter ($\mu$m) | 13.6 | 13.6 | 13.6 |
| | Basis weight (g/m$^2$) | 20 | 15.3 | 15.3 |
| Middle layer (M) | Resin type | PET | PET | PET |
| | Fiber diameter ($\mu$m) | 0.8 | 1.7 | 1.7 |
| | Basis weight (g/m$^2$) | 30 | 9.4 | 9.4 |
| Lower layer (S2) | Component A starting material | PET | PET | PET/ CoPET |
| | Component B starting material | PM130N | PM130N | PM130N |
| | Component B glass transition point (°C) | 128 | 128 | 128 |
| | Component B addition (wt%) | 1 | 1 | 1 |
| | Spinning speed (m/min) | 4500 | 4500 | 4500 |
| | Birefringence | 0.041 | 0.041 | 0.040 |
| | Fiber diameter ($\mu$m) | 13.6 | 13.6 | 13 |
| | Basis weight (g/m$^2$) | 20 | 15.3 | 15.3 |
| Total basis weight (g/m$^2$) | | 70 | 40 | 40 |
| Embossing area ratio (%) | | 11.4 | 11.4 | 11.4 |
| Emboss pattern | | IL | IL | IL |
| Distance between contact-bonded sections (mm) | Machine direction | 3 | 3 | 3 |
| | Widthwise direction | 2.8 | 2.8 | 2.8 |
| Calender temperature (°C) | Upper (embossing roll) | 190 | 185 | 185 |
| | Lower (flat roll) | 190 | 185 | 120 |
| Calender pressure (N/mm) | | 30 | 30 | 30 |
| Thickness (mm) | | 0.3 | 0.18 | 0.18 |
| Apparent density (g/cm$^3$) | | 0.23 | 0.22 | 0.22 |
| Middle layer (M) | Thickness ($\mu$m) | 50.0 | 20.0 | 21.0 |
| | Bulk density (g/cm$^3$) | 0.60 | 0.47 | 0.45 |
| Air permeability (cc/cm$^2$/sec) | | 2 | 27 | 26 |
| Fluff grade | Embossing roll surface | 4 | 3.6 | 3.6 |
| | Flat roll surface | 4.1 | 3.9 | 4 |
| | Fluff grade difference | 0.1 | 0.3 | 0.4 |

(continued)

|  |  | Example | | |
|---|---|---|---|---|
|  |  | 12 | 13 | 14 |
| 180°C Dry heat contraction (%) | | 2.0 | 2.5 | 4.1 |
| Stress during biaxial stretching (150°C, 200% area development rate) | MD | 37.1 | 21.2 | 22.8 |
|  | CD | 12.46 | 7.12 | 7.5 |
|  | MD+CD | 50 | 28 | 30 |
| State of fabric after biaxial stretching | | G | G | G |
| Air permeability after biaxial stretching (cc/cm$^2$/sec) | | 4.5 | 55 | 56 |
| Increase in air permeability before and after biaxial stretching | | 225% | 204% | 215% |
| Sound absorption evaluation (%) | Mean sound absorption coefficient before stretching (%) | 55 | 60 | 61 |
|  | Mean sound absorption coefficient after stretching (%) | 54 | 50 | 50 |
|  | Evaluation | G | G | G |

[Example 15]

Three nonwoven fabrics obtained as in Example 7 were layered and pressed with a hot plate at 150°C to obtain a layered nonwoven fabric.

The sound-absorbing base material used was a continuous foam melamine resin layer with a thickness of 10 mm, a basis weight of 10 g/m$^2$ and a bulk density of 0.01 g/cm$^3$ (melamine resin continuous foam, Basotect TG by BASF Corp.), and it was joined with the aforementioned layered nonwoven fabric. The joining was by heating and pressurized heat treatment in an atmosphere with a temperature of 150°C while sandwiched by a mesh-like conveyor belt, to obtain a composite sound-absorbing material. The physical properties of the obtained composite sound-absorbing material are shown in Table 5.

[Example 16]

A composite sound-absorbing material was obtained in the same manner as Example 15, except that the sound-absorbing base material used was one with a basis weight of 200 g/m$^2$, a thickness of 25 mm and a bulk density of 0.08 g/cm$^3$, obtained by open web formation by a carding method, with 70% polyester staple fibers (fiber diameter: 25 μm, fiber length: 51 mm) and 30% copolymerized polyester fibers (melting point: 135°C, fiber size: 15 μm, fiber length: 51 mm) and tangling by needle punching. The physical properties of the obtained composite sound-absorbing material are shown in Table 5.

[Example 17]

Three nonwoven fabrics obtained as in Example 6 were layered and coated with a copolymerized polyester-based hot-melt powder (melting point: 130°C) to 20 g/m$^2$ and pressed with a hot plate at 150°C, to obtain a layered nonwoven fabric.

The sound-absorbing base material layer used was a continuous foam melamine resin layer with a thickness of 10 mm, a basis weight of 10 g/cm$^2$ and a bulk density of 0.01 g/cm$^3$ (melamine resin continuous foam, Basotect TG by BASF Corp.), and it was joined with the aforementioned layered nonwoven fabric. The joining was by coating the hot-melt powder onto continuous foam melamine resin layers to 20 g/cm$^2$ and stacking the layered nonwoven fabrics, followed by heating and pressurized heat treatment in an atmosphere with a temperature of 150°C while sandwiched by a mesh-like conveyor belt, to obtain a composite sound-absorbing material of the invention. The physical properties of the obtained composite sound-absorbing material are shown in Table 5.

[Example 18]

A composite sound-absorbing material was obtained in the same manner as Example 15, except that five nonwoven fabrics were layered. The physical properties of the obtained composite sound-absorbing material are shown in Table 5.

[Example 19]

A composite sound-absorbing material was obtained in the same manner as Example 18, except that the temperature during hot plate pressing was 180°C, and the nonwoven fabric had a bulk density of 0.4 g/cm$^3$ and a thickness of 0.5 mm. The physical properties of the obtained composite sound-absorbing material are shown in Table 5.

[Example 20]

A composite sound-absorbing material was obtained in the same manner as Example 15, except that ten nonwoven fabrics were layered. The physical properties of the obtained composite sound-absorbing material are shown in Table 5.

[Example 21]

A polyethylene terephthalate resin (solution viscosity ηsp/c: 0.77, measured at 1%, 25°C using orthochlorophenol, melting point: 263°C) was supplied to a regular melt spinning apparatus, melted at 300°C and discharged through a spinning nozzle having a spinning hole with a circular cross-section, and a high-speed airflow traction device was used to cool the yarn with an air jet while stretching at a spinning speed of 3550 m/min, to form a fiber web (S1) (basis weight: 7.7 g/m$^2$, mean fiber diameter: 15.3 μm) on a meshed net. Polyethylene terephthalate (solution viscosity ηsp/c: 0.50, melting point: 260°C) was directly ejected onto the obtained continuous filament web (S1) from a melt blow nozzle, under conditions with a spinning temperature of 300°C, heated air at 320°C and 1000 Nm$^3$/hr, to form an ultrafine fiber web (M) (basis weight: 4.6 g/m$^2$, mean fiber diameter: 1.7 μm, bulk density: 0.45 g/cm$^3$). During this step, the distance from the melt blow nozzle to the continuous long fiber layer was 110 mm, and the suction wind speed at the collecting surface directly under the melt blow nozzle was set to 7 m/sec. Next, a two-component spinning nozzle was used to form a continuous filament web (S2) (7.7 g/m$^2$, mean fiber diameter: 15.3 μm) having a copolymerized polyester resin (melting point: 160°C) as the sheath component and a polyethylene terephthalate resin(melting point: 263°C) as the core component. The Δn value for S1 and S2 was 0.042. The obtained layered web was then subjected to thermocompression bonding with a calender linear pressure of 30 N/mm, using a flat roll and an IL pattern embossing roll designed for a thermocompression bonded-section area ratio during thermocompression bonding of 15.3%, and distances of 3.0 mm between thermocompression bonded sections in the MD direction and distances of 2.8 mm between thermocompression bonded sections in the CD direction, with the surface temperature of the embossing roll at 185°C and the surface temperature of the flat roll at 120°C, to obtain a nonwoven fabric having a basis weight of 20 g/m$^2$ and a bulk density of 0.45 g/cm$^3$. The sound-absorbing base material used was a continuous foam melamine resin layer with a thickness of 10 mm, a basis weight of 10 g/m$^2$ and a bulk density of 0.01 g/cm$^3$ (melamine resin continuous foam, Basotect TG by BASF Corp.), and it was joined with the aforementioned layered nonwoven fabric. The joining was by heating and pressurized heat treatment in an atmosphere with a temperature of 150°C while sandwiched by a mesh-like conveyor belt, to obtain a composite sound-absorbing material. The physical properties of the obtained composite sound-absorbing material are shown in Table 5.

[Example 22]

A composite sound-absorbing material was obtained in the same manner as Example 15, except that three nonwoven fabrics obtained as in Example 14 were layered. The physical properties of the obtained composite sound-absorbing material are shown in Table 5.

[Table 5]

Table 5

| | | | Example | | | | | | | |
| --- | --- | --- | --- | --- | --- | --- | --- | --- | --- | --- |
| | | | 15 | 16 | 17 | 18 | 19 | 20 | 21 | 22 |
| Synthetic fiber nonwoven fabric | Upper layer (S1) | Resin type | PET | PET | PET | PET | PET | PET | PET | PET/PM130N |
| | | Fiber diameter ($\mu$m) | 15.3 | 15.3 | 15.3 | 15.3 | 15.3 | 15.3 | 15.3 | 13.6 |
| | | Basis weight (g/m$^2$) | 15.3 | 15.3 | 15.3 | 15.3 | 15.3 | 15.3 | 7.7 | 15.3 |
| | Middle layer (M) | Resin type | PET | PET | PET | PET | PET | PET | PET | PET |
| | | Fiber diameter ($\mu$m) | 1.7 | 1.7 | 1.7 | 1.7 | 1.7 | 1.7 | 1.7 | 1.7 |
| | | Basis weight (g/m$^2$) | 9.4 | 9.4 | 9.4 | 9.4 | 9.4 | 9.4 | 4.6 | 9.4 |
| | Lower layer (S2) | Resin type | PET/ CoPET | PET/ CoPET | PET | PET/ CoPET | PET/ CoPET | PET/ CoPET | PET/ CoPET | PET/CoPET/ PM130N |
| | | Fiber diameter ($\mu$m) | 15.3 | 15.3 | 15.3 | 15.3 | 15.3 | 15.3 | 15.3 | 15.3 |
| | | Basis weight (g/m$^2$) | 15.3 | 15.3 | 15.3 | 15.3 | 15.3 | 15.3 | 7.7 | 15.3 |
| | Total basis weight (g/m$^2$) | | 40 | 40 | 40 | 40 | 40 | 40 | 20 | 40 |
| | Partial thermocompression bonding rate (%) | | 11.4 | 11.4 | 11.4 | 11.4 | 11.4 | 11.4 | 15.3 | 11.4 |
| | Thickness (mm) | | 0.18 | 0.18 | 0.18 | 0.18 | 0.18 | 0.18 | 0.156 | 0.18 |
| | Apparent density (g/cm$^3$) | | 0.22 | 0.22 | 0.22 | 0.22 | 0.22 | 0.22 | 0.13 | 0.22 |

(continued)

| | | Example | | | | | | | |
|---|---|---|---|---|---|---|---|---|---|
| | | 15 | 16 | 17 | 18 | 19 | 20 | 21 | 22 |
| | Air permeability (cc/cm$^2$/sec) | 27 | 27 | 28 | 27 | 27 | 27 | 29 | 26 |
| Layered nonwoven fabric | Layer bonding method | Heat seal hot press | Heat seal hot press | Hot-melt agent + hot press | Heat seal hot press | Heat seal hot press | Heat seal hot press | Heat seal hot press | Heat seal hot press |
| | Number of layers | 3 | 3 | 3 | 5 | 5 | 10 | 5 | 3 |
| | Total basis weight (g/m$^2$) | 120 | 120 | 140 | 200 | 200 | 400 | 100 | 120 |
| | Thickness (mm) | 0.42 | 0.42 | 0.45 | 0.79 | 0.5 | 1.3 | 0.42 | 0.42 |
| | Apparent density (g/cm$^3$) | 0.29 | 0.29 | 0.31 | 0.25 | 0.40 | 0.31 | 0.24 | 0.29 |
| | Distance between ultrafine fiber layers (μm) | 124 | 124 | 121 | 135 | 58 | 99 | 75 | 124 |
| Base material | Resin type | Melamine | PET/CoPET | Melamine | Melamine | Melamine | Melamine | Melamine | Melamine |
| | Form | Continuous resin foam | Staple fiber-NP nonwoven fabric | Continuous resin foam | Continuous resin foam | Continuous resin foam | Continuous resin foam | Continuous resin foam | Continuous resin foam |
| | Thickness (mm) | 10 | 25 | 10 | 10 | 10 | 10 | 10 | 10 |
| | Apparent density (g/cm$^3$) | 0.01 | 0.08 | 0.01 | 0.01 | 0.01 | 0.01 | 0.01 | 0.01 |
| | Basis weight (g/m$^2$) | 10 | 200 | 10 | 10 | 10 | 10 | 10 | 10 |
| Joining | Joining type | Heat seal hot press | Heat seal hot press | Hot-melt agent + hot press | Heat seal hot press | Heat seal hot press | Heat seal hot press | Heat seal hot press | Heat seal hot press |
| | Basis weight (g/m$^2$) | 0 | 0 | 20 | 0 | 0 | 0 | 20 | 0 |
| | Basis weight (g/m$^2$) | 130 | 320 | 170 | 210 | 210 | 410 | 130 | 130 |
| | Thickness (mm) | 10.42 | 25.42 | 10.45 | 10.79 | 10.5 | 11.3 | 10.42 | 10.42 |
| | Apparent density (g/cm$^3$) | 0.125 | 0.126 | 0.163 | 0.195 | 0.200 | 0.363 | 0.125 | 0.125 |

| | | | Example | | | | | | | |
|---|---|---|---|---|---|---|---|---|---|---|
| | | | 15 | 16 | 17 | 18 | 19 | 20 | 21 | 22 |
| Sound absorbing layered body | Sound absorption (%) | Frequency 1000 Hz | 20 | 19 | 21 | 31 | 37 | 43 | 30 | 21 |
| | | Frequency 1600 Hz | 51 | 45 | 52 | 80 | 91 | 89 | 80 | 50 |
| | | Frequency 2000 Hz | 77 | 65 | 80 | 96 | 95 | 92 | 97 | 77 |
| | | Frequency 2500 Hz | 98 | 87 | 99 | 91 | 75 | 79 | 91 | 98 |
| | | Frequency 3150 Hz | 96 | 98 | 91 | 76 | 64 | 60 | 75 | 97 |
| | | Frequency 4000 Hz | 79 | 85 | 71 | 62 | 51 | 48 | 62 | 79 |
| | Mean sound absorption coefficient A (%) | | 70 | 67 | 69 | 73 | 69 | 69 | 73 | 70 |

EP 3 730 684 B1

[Comparative Example 1]

A polyethylene terephthalate resin (solution viscosity ηsp/c: 0.77, measured at 1%, 25°C using orthochlorophenol, melting point: 263°C) was supplied to a regular melt spinning apparatus, melted at 300°C and discharged through a spinning nozzle having a spinning hole with a circular cross-section, and a high-speed airflow traction device was used to cool the yarn with an air jet while stretching at a spinning speed of 4500 m/min, to form a fiber web (S1) (basis weight: 20.8 g/m$^2$, mean fiber diameter: 13.6 μm) on a meshed net. Polyethylene terephthalate (solution viscosity ηsp/c: 0.50, melting point: 260°C) was directly ejected onto the obtained continuous filament web (S1) from a melt blow nozzle, under conditions with a spinning temperature of 300°C, heated air at 320°C and 1000 Nm$^3$/hr, to form an ultrafine fiber web (M) (basis weight: 8.4 g/m$^2$, mean fiber diameter: 1.7 μm). During this step, the distance from the melt blow nozzle to the continuous long fiber layer was 100 mm, and the suction wind speed at the collecting surface directly under the melt blow nozzle was set to 7 m/sec. A continuous filament web (S2) of polyethylene terephthalate was also formed on the obtained ultrafine fiber web, in the same manner as the fiber web (S1). The obtained layered web was then subjected to thermocompression bonding with a calender linear pressure of 30 N/mm, using a flat roll and an IL pattern embossing roll designed for a thermocompression bonded-section area ratio during thermocompression bonding of 11.4%, and distances of 3.0 mm between thermocompression bonded sections in the MD direction and distances of 2.8 mm between thermocompression bonded sections in the CD direction, with the surface temperature of the embossing roll at 230°C and the surface temperature of the flat roll at 230°C, to obtain a nonwoven fabric having a basis weight of 50 g/m$^2$ and a bulk density of 0.22 g/cm$^3$. The physical properties of the obtained layered nonwoven fabric are shown in Table 6. The obtained nonwoven fabric exhibited tearing when stretched to an area development rate of 200% with a simultaneous biaxial stretching machine in an atmosphere at 150°C. Since the fabric was torn, it was not possible to measure the air permeability or sound absorption performance after stretching. The physical properties of the obtained nonwoven fabric are shown in Table 6.

[Comparative Example 2]

The procedure was carried out in the same manner as Comparative Example 1, except that the spinning speed was 2500 m/min during fabrication of the continuous filament webs (S1, S2), the fiber size was 18.2 μm for each, the surface temperature of the embossing roll was 100°C and the surface temperature of the flat roll was 100°C, but the fibers attached onto the roll during thermocompression bonding, making it impossible to obtain a nonwoven fabric, and therefore the air permeability and sound absorption performance after stretching could not be measured.

[Comparative Example 3]

A nonwoven fabric was obtained in the same manner as Example 2, except that polyethylene terephthalate (solution viscosity ηsp/c: 0.50, melting point: 260°C) was directly ejected from a melt blow nozzle under conditions with a spinning temperature of 320°C, heated air at 360°C and 1200 Nm$^3$/hr, to form an ultrafine fiber web (M) (basis weight: 8.4 g/m$^2$, mean fiber diameter: 0.8 μm), with the distance from the melt blow nozzle to the continuous long fiber layer set to 75 mm. The physical properties of the obtained nonwoven fabric are shown in Table 6. The obtained nonwoven fabric exhibited cracking in the melt-blown ultrafine fiber layer when the area development rate was 200% with a simultaneous biaxial stretching machine in an atmosphere at 150°C, and the air permeability was drastically increased compared to before simultaneous biaxial stretching. The physical properties of the obtained nonwoven fabric are shown in Table 6.

[Comparative Example 4]

A nonwoven fabric was obtained in the same manner as Example 2, except that polyethylene terephthalate (solution viscosity ηsp/c: 0.50, melting point: 260°C) was directly ejected from a melt blow nozzle under conditions with a spinning temperature of 320°C, heated air at 360°C and 1200 Nm$^3$/hr, to form an ultrafine fiber web (M) (basis weight: 8.4 g/m$^2$, mean fiber diameter: 1.7 μm), with the distance from the melt blow nozzle to the continuous long fiber layer set to 205 mm. The physical properties of the obtained nonwoven fabric are shown in Table 6. The obtained nonwoven fabric exhibited stretch marks in the melt-blown ultrafine fiber layer when the area development rate was 200% with a simultaneous biaxial stretching machine in an atmosphere at 150°C, and the air permeability was drastically increased compared to before simultaneous biaxial stretching. The physical properties of the obtained nonwoven fabric are shown in Table 6.

[Table 6]

Table 6

| | | | Comparative Example | | | |
|---|---|---|---|---|---|---|
| | | | 1 | 2 | 3 | 4 |
| Upper layer (S1) | | Component A starting material | PET | PET | PET | PET |
| | | Spinning speed (m/min) | 4500 | 2500 | 3550 | 3550 |
| | | Birefringence | 0.095 | 0.025 | 0.042 | 0.042 |
| | | Fiber diameter ($\mu$m) | 13.6 | 18.2 | 15.3 | 15.3 |
| | | Basis weight (g/m$^2$) | 20.8 | 20.8 | 20.8 | 20.8 |
| Middle layer (M) | | Resin type | PET | PET | PET | PET |
| | | Fiber diameter ($\mu$m) | 1.7 | 1.7 | 0.8 | 1.7 |
| | | Basis weight (g/m$^2$) | 8.4 | 8.4 | 8.4 | 8.4 |
| Lower layer (S2) | | Resin type | PET | PET | PET | PET |
| | | Spinning speed (m/min) | 4500 | 2500 | 3550 | 3550 |
| | | Birefringence | 0.095 | 0.025 | 0.042 | 0.042 |
| | | Fiber diameter ($\mu$m) | 13.6 | 18.2 | 15.3 | 15.3 |
| | | Basis weight (g/m$^2$) | 20.8 | 20.8 | 20.8 | 20.8 |
| Total basis weight (g/m$^2$) | | | 50 | 50 | 50 | 50 |
| Embossing area ratio (%) | | | 11.4 | 11.4 | 11.4 | 11.4 |
| Emboss pattern | | | IL | IL | IL | IL |
| Distance between contact-bonded sections (mm) | | Machine direction | 3 | 3 | 3 | 3 |
| | | Widthwise direction | 2.8 | 2.8 | 2.8 | 2.8 |
| Calender temperature (°C) | | Upper (embossing roll) | 230 | 100 | 185 | 185 |
| | | Lower (flat roll) | 230 | 100 | 185 | 185 |
| Calender pressure (N/mm) | | | 30 | | 30 | 30 |
| Thickness (mm) | | | 0.23 | | 0.22 | 0.23 |
| Apparent density (g/cm3) | | | 0.22 | | 0.23 | 0.22 |
| Middle layer (M) | | Thickness ($\mu$m) | 20.0 | | 11.9 | 25.0 |
| | | Bulk density (g/cm$^3$) | 0.42 | Take-up by roll | 0.75 | 0.34 |
| Air permeability (cc/cm$^2$/sec) | | | 24 | | 7 | 26 |
| Fluff grade | | Embossing roll surface | 4.3 | | 3.6 | 3.6 |
| | | Flat roll surface | 4.5 | | 3.9 | 3.9 |
| | | Fluff grade difference | 0.2 | | 0.3 | 0.3 |
| 180°C Dry heat contraction (%) | | | 0.4 | | 2.3 | 3.00 |

(continued)

| | | Comparative Exam le | | | |
|---|---|---|---|---|---|
| | | 1 | 2 | 3 | 4 |
| Stress during biaxial stretching (150°C, 200% area development rate) | MD | 70 | | 26.5 | 27 |
| | CD | 25 | | 8.8 | 9 |
| | MD+CD | 95 | | 35 | 36 |
| State of fabric after biaxial stretching | | P | | P | F |
| Air permeability after biaxial stretching (cc/cm$^2$/sec) | | - | Take-up by roll | 20 | 67 |
| Increase in air permeability before and after biaxial stretching | | - | | 286% | 258% |
| Sound absorption evaluation (%) | Mean sound absorption coefficient before stretching (%) | - | | 58 | 61 |
| | Mean sound absorption coefficient after stretching (%) | - | | 40 | 44 |
| | Evaluation | - | | P | P |

[Comparative Example 5]

A nonwoven fabric was obtained in the same manner as Example 9, except that polyethylene terephthalate (solution viscosity ηsp/c: 0.50, melting point: 260°C) was directly ejected from a melt blow nozzle under conditions with a spinning temperature of 320°C, heated air at 360°C and 1200 Nm$^3$/hr, to form an ultrafine fiber web (M) (basis weight: 8.4 g/m$^2$, mean fiber diameter: 0.8 $\mu$m), with the distance from the melt blow nozzle to the continuous long fiber layer set to 75 mm. The physical properties of the obtained nonwoven fabric are shown in Table 7. The obtained nonwoven fabric exhibited cracking in the ultrafine fiber layer when the area development rate was 200% with a simultaneous biaxial stretching machine in an atmosphere at 150°C, and the air permeability was drastically increased compared to before simultaneous biaxial stretching.

[Comparative Example 6]

A nonwoven fabric was obtained in the same manner as Example 9, except that polyethylene terephthalate (solution viscosity ηsp/c: 0.50, melting point: 260°C) was directly ejected from a melt blow nozzle under conditions with a spinning temperature of 320°C, heated air at 360°C and 1200 Nm$^3$/hr, to form an ultrafine fiber web (M) (basis weight: 8.4 g/m$^2$, mean fiber diameter: 1.7 $\mu$m), with the distance from the melt blow nozzle to the continuous long fiber layer set to 205 mm. The physical properties of the obtained nonwoven fabric are shown in Table 7. The obtained nonwoven fabric exhibited stretch marks in the ultrafine fiber layer when the area development rate was 200% with a simultaneous biaxial stretching machine in an atmosphere at 150°C, and the air permeability was drastically increased compared to before simultaneous biaxial stretching.

[Comparative Example 7]

With reference to Example 1 of Japanese Unexamined Patent Publication No. 2013-163869, a polyethylene terephthalate spinning nozzle was used to form a continuous filament web (S1) made of polyethylene terephthalate (melting point: 263°C) by a spunbond method on a meshed net at a spinning temperature of 300°C, and then yarn made of polyethylene terephthalate (melting point: 265°C) was ejected onto the obtained continuous long fiber web (S1, basis weight: 10 g/m$^2$, mean fiber diameter: 14 $\mu$m) using a melt blowing nozzle under conditions with a spinning temperature of 300°C, a heated air temperature of 320°C, 1000 Nm$^2$/hr and a blasting distance of 75 mm, to form an ultrafine fiber web (basis weight: 5 g/m$^2$, mean fiber diameter: 3 $\mu$m). A two-component spinning nozzle was used to layer a sheath-core long fiber web (S2, basis weight: 10 g/m$^2$, mean fiber diameter: 18 $\mu$m) comprising copolymerized polyester (melting point: 210°C) as the sheath component and polyethylene terephthalate (melting point: 265°C) as the core component on an ultrafine fiber web, by a spunbond method. The obtained layered web was subjected to partial thermocompression bonding using an embossing roll/flat roll pair under conditions with a temperature of 230°C/165°C and a linear pressure of 300 N/cm, to obtain a nonwoven fabric having a basis weight of 25 g/m$^2$, a thickness of 0.17 mm and a partial thermocompression bonding rate of 15%. The physical properties of the obtained nonwoven fabric are shown in Table 7. The obtained nonwoven fabric exhibited tearing when stretched to an area development rate of 200% with a simultaneous biaxial stretching machine in an atmosphere at 150°C. Since the fabric was torn, it was not possible to measure the air permeability or sound absorption performance after stretching.

[Table 7]

Table 7

| | | Comparative Example | | |
|---|---|---|---|---|
| | | 5 | 6 | 7 |
| Upper layer (S1) | Component A starting material | PET | PET | PET |
| | Component B starting material | PM130N | PM130N | - |
| | Component B glass transition point (°C) | 128 | 128 | - |
| | Component B addition (wt%) | 1 | 1 | - |
| | Spinning speed (m/min) | 4500 | 4500 | 4500 |
| | Birefringence | 0.041 | 0.041 | 0.097 |
| | Fiber diameter ($\mu$m) | 13.6 | 13.6 | 14 |
| | Basis weight (g/m$^2$) | 20.8 | 20.8 | 10 |
| Middle layer (M) | Resin type | PET | PET | PET |
| | Fiber diameter ($\mu$m) | 0.8 | 1.7 | 3 |
| | Basis weight (g/m$^2$) | 8.4 | 8.4 | 5 |
| Lower layer (S2) | Resin type | PET | PET | PET |
| | Component B starting material | PM130N | PM130N | - |
| | Component B glass transition point (°C) | 128 | 128 | - |
| | Component B addition (wt%) | 1 | 1 | - |
| | Spinning speed (m/min) | 4500 | 4500 | 4500 |
| | Birefringence | 0.041 | 0.041 | 0.097 |
| | Fiber diameter ($\mu$m) | 13.6 | 13.6 | 14 |
| | Basis weight (g/m$^2$) | 20.8 | 20.8 | 10 |
| Total basis weight (g/m$^2$) | | 50 | 50 | 25 |
| Embossing area ratio (%) | | 11.4 | 11.4 | 15 |
| Emboss pattern | | IL | IL | Weave texture |
| Distance between contact-bonded sections (mm) | Machine direction | 3 | 3 | 0.7 |
| | Widthwise direction | 2.8 | 2.8 | 0.7 |
| Calender temperature (°C) | Upper (embossing roll) | 185 | 185 | 230 |
| | Lower (flat roll) | 185 | 185 | 165 |
| Calender pressure (N/mm) | | 30 | 30 | 30 |
| Thickness (mm) | | 0.23 | 0.23 | 0.17 |
| Apparent density (g/cm3) | | 0.22 | 0.22 | 0.15 |

(continued)

| | | Comparative Example | | |
|---|---|---|---|---|
| | | 5 | 6 | 7 |
| Middle layer (M) | Thickness ($\mu$m) | 11.9 | 25 | 6.9 |
| | Bulk density (g/cm$^3$) | 0.71 | 0.34 | 0.72 |
| Air permeability (cc/cm$^2$/sec) | | 7 | 25 | 15 |
| Fluff grade | Embossing roll surface | 3.6 | 3.6 | 4.3 |
| | Flat roll surface | 3.9 | 3.9 | 4.5 |
| | Fluff grade difference | 0.3 | 0.3 | 0.2 |
| 180°C Drv heat contraction (%) | | 2.3 | 3 | 0.3 |
| Stress during biaxial stretching (150°C, 200% area development rate) | MD | 25.5 | 27 | 12 |
| | CD | 8.2 | 9 | 4 |
| | MD+CD | 34 | 36 | 18 |
| State of fabric after biaxial stretching | | P | F | P |
| Air permeability after biaxial stretching (cc/cm$^2$/sec) | | 20 | 64 | - |
| Increase in air permeability before and after biaxial stretching | | 286% | 256% | - |
| Sound absorption evaluation (%) | Mean sound absorption coefficient before stretching | 59 | 62 | - |
| | Mean sound absorption coefficient after stretching | 41 | 45 | - |
| | Evaluation | P | P | - |

[Comparative Example 8]

The properties of the sound-absorbing base materials used in Examples 15 and 17 to 22 and Reference Examples 1 and 2 below, by themselves, are shown in Table 8. The sound absorption coefficient was 43% at a frequency of 6300 Hz, and the mean sound absorption coefficient was 23% at 1000 Hz, 1600 Hz, 2000 Hz, 2500 Hz, 3150 Hz, 4000 Hz and 6300 Hz.

[Comparative Example 9]

The properties of the sound-absorbing base materials used in Example 16 and Reference Example 3 below, by themselves, are also shown in Table 8.

[Reference Example 1]

A composite sound-absorbing material was obtained in the same manner as Example 15, except that the temperature during hot plate pressing was 200°C, and the layered nonwoven fabric had a bulk density of 0.63 g/cm$^3$ and a thickness of 0.19 mm. The physical properties of the obtained composite sound-absorbing material are shown in Table 8.

Compared to Example 15, the composite sound-absorbing material of Reference Example 1 did not have adequate distance between the ultrafine fiber layers (M), the air layer of the continuous long fiber layer (S) was insufficient, and the sound-absorbing base material could not be provided with a high sound absorption effect.

[Reference Example 2]

A composite sound-absorbing material was obtained in the same manner as Example 15, except that the skin material used was the nonwoven fabric of Comparative Example 3, without layering (joining) by hot pressing. The physical properties of the obtained composite sound-absorbing material are shown in Table 8. The ultrafine fiber layers (M) had high bulk density, the distance between the ultrafine fiber nonwoven fabric layers (M) was 220 $\mu$m, and the sound-absorbing base material could not be provided with a high sound absorption effect. It is conjectured that since the distance between the continuous long fiber layers (S) between the ultrafine fiber layers (M) was too large, it did not exhibit an effect in which the air layers of the sparse continuous long fiber layers (S) act as springs similar to a rear air layer to cause more efficient vibration of the air in the ultrafine fiber layers (M), thereby producing friction between the air and ultrafine fibers in the ultrafine fiber layers (M) so that vibrational sound energy is converted into thermal energy and the sound absorption property of the sound-absorbing base material is improved, and did not exhibit the re-absorption effect whereby reflected sound that cannot be absorbed by the sound-absorbing base material is again absorbed when passing through the layered nonwoven fabric.

[Reference Example 3]

In the same manner as Example 11 of PTL 3, polyethylene terephthalate (solution viscosity $\eta$sp/c: 0.77, measured at 1%, 25°C using orthochlorophenol, melting point: 263°C) was spun from a spinning nozzle, forming a fiber web (S1) on a meshed net by a spunbond method at a spinning temperature of 300°C. Polyethylene terephthalate (solution viscosity $\eta$sp/c: 0.50, melting point: 260°C) was directly ejected onto the obtained continuous filament web (basis weight: 22.5 g/m$^2$, mean fiber diameter: 14 $\mu$m) from a melt blow nozzle, under conditions with a spinning temperature of 300°C, heated air at 320°C and 1000 Nm$^3$/hr, to form an ultrafine fiber web (M) (basis weight: 5 g/m$^2$, mean fiber diameter: 2 $\mu$m). A layered web, obtained by layering a composite filament web (C) (basis weight: 22.5 g/m$^2$, mean fiber size: 18 $\mu$m) comprising high-density polyethylene (melting point: 130°C) as the sheath component and polyethylene terephthalate (melting point: 263°C) as the core component onto the ultrafine fiber web using a two-component spinning nozzle, was subjected to partial thermocompression bonding with an embossing roll/flat roll pair at a temperature of 230°C/105°C, at a linear pressure of 300 N/cm, to obtain a nonwoven fabric with a basis weight of 50 g/m$^2$, a bulk density of 0.22 g/cm$^3$ and a thermocompression bonding rate of 15.3%.

An open web was formed by a carding method from 70% polyester staple fibers (fiber diameter: 25 $\mu$m, fiber length: 51 mm) and 30% copolymerized polyester fibers (melting point: 135°C, fiber diameter: 15 $\mu$m, fiber length: 51 mm) and tangled by needle punching, and after stacking the obtained base material with the nonwoven fabric at a basis weight of 200 g/m$^2$, a thickness of 25 mm and an average apparent density of 0.08 g/cm$^3$, and joining them by mechanical entangling with a #40 needle at a depth of 8 mm and a frequency of 35/cm$^2$, the skin material side was contacted with a heated roll at a temperature of 150°C, treating it to block the needle holes, to obtain a composite sound-absorbing material. The results are shown in Table 8 below. As demonstrated by Comparative Example 9, the sound absorption effect of the base material alone was 9% at 1000 Hz, 10% at 1600 Hz, 11% at 2000 Hz, 12% at 2500 Hz, 15% at 3150 Hz and 18% at 4000 Hz, for a mean sound absorption coefficient A of 13%. The obtained sound-absorbing material was not point-bonded, the distance between ultrafine fiber nonwoven fabric layers (M) was 220 $\mu$m, and the sound-absorbing base material could not be provided with a high sound absorption effect.

[Table 8]

Table 8

| | | | Comparative Example | | Reference Example | | |
|---|---|---|---|---|---|---|---|
| | | | 8 | 9 | 1 | 2 | 3 |
| Synthetic fiber nonwoven fabric | Upper layer (S1) | Resin type | | | PET | PET | PET |
| | | Fiber diameter ($\mu$m) | | | 15.3 | 15.3 | 14 |
| | | Basis weight (g/m$^2$) | | | 15.3 | 20.8 | 22.5 |
| | Middle layer (M) | Resin type | | | PET | PET | PET |
| | | Fiber diameter ($\mu$m) | | | 1.7 | 1.7 | 2 |
| | | Basis weight (g/m$^2$) | | | 9.4 | 8.4 | 5 |
| | Lower layer (S2) | Resin type | - | - | PET/ CoPET | PET | PET/PE |
| | | Fiber diameter ($\mu$m) | | | 15.3 | 15.3 | 18 |
| | | Basis weight (g/m$^2$) | | | 15.3 | 20.8 | 22.5 |
| | Total basis weight (g/m$^2$) | | | | 40 | 50 | 50 |
| | Partial thermocompression bonding rate (%) | | | | 11.4 | 11.4 | 15 |
| | Thickness (mm) | | | | 0.18 | 0.22 | 0.23 |
| | Apparent density (g/cm$^3$) | | | | 0.22 | 0.23 | 0.22 |
| | Air permeability (cc/cm$^2$/sec) | | | | 27 | 7 | 35 |
| Layered nonwoven fabric | Layer bonding method | | | | Heat seal hot press | - | Needle punching |
| | Number of layers | | - | - | 3 | 2 | 2 |
| | Total basis weight (g/m$^2$) | | - | - | 120 | 100 | 100 |
| | Thickness (mm) | | - | - | 0.19 | 0.44 | 0.46 |
| | Apparent density (g/cm$^3$) | | - | - | 0.63 | 0.23 | 0.22 |
| | Distance between ultrafine fiber layers ($\mu$m) | | - | - | 20 | 220 | 220 |

(continued)

| Base material | | Comparative Example | | Reference Example | | |
|---|---|---|---|---|---|---|
| | | 8 | 9 | 1 | 2 | 3 |
| Base material | Resin type | Melamine | PET/ CoPET | Melamine | Melamine | PET/ CoPET |
| | Form | Continuous resin foam | Staple fiber-NP nonwoven fabric | Continuous resin foam | Continuous resin foam | Staple fiber-NP nonwoven fabric |
| | Thickness (mm) | 10 | 25 | 10 | 10 | 25 |
| | Apparent density (g/cm$^3$) | 0.01 | 0.08 | 0.01 | 0.01 | 0.08 |
| | Basis weight (g/m$^2$) | 10 | 200 | 10 | 10 | 200 |
| Joining | Joining type | - | - | Heat seal hot press | - | - |
| | Basis weight (g/m$^2$) | - | - | 0 | 0 | - |
| Sound absorbing layered body | Basis weight (g/m$^2$) | 10 | 200 | 130 | 110 | 300 |
| | Thickness (mm) | 10 | 25 | 25 | 10 | 25 |
| | Apparent density (g/cm$^3$) | 0.010 | 0.010 | 0.052 | 0.110 | 0.120 |
| | Sound absorption (%) Frequency 1000 Hz | 11 | 9 | 22 | 19 | 22 |
| | Frequency 1600 Hz | 14 | 10 | 62 | 52 | 40 |
| | Frequency 2000 Hz | 18 | 11 | 80 | 78 | 50 |
| | Frequency 2500 Hz | 20 | 12 | 75 | 83 | 61 |
| | Frequency 3150 Hz | 24 | 15 | 52 | 59 | 73 |
| | Frequency 4000 Hz | 31 | 18 | 32 | 37 | 88 |
| | Mean sound absorption coefficient A (%) | 20 | 13 | 54 | 55 | 56 |

INDUSTRIAL APPLICABILITY

The nonwoven fabric and layered nonwoven fabric of the invention has satisfactory moldability, a small thickness, a light weight and excellent shape stability, while also having air permeability controllable to within a fixed range even after molding and being able to provide sound-absorbing base materials with high sound absorption properties at the low to mid frequencies of 1000 Hz, 1600 Hz, 2000 Hz, 2500 Hz, 3150 Hz and 4000 Hz, and it can therefore be suitably used as a skin material for moldable composite sound-absorbing materials, and especially for those to be used in vehicles, homes, household electrical appliances and construction equipment.

**Claims**

1. A nonwoven fabric having a layered structure in which at least one ultrafine fiber layer (M) having a mean fiber diameter, determined as described in the description, of 0.3 $\mu$m to 7 $\mu$m and a basis weight of 1 g/m$^2$ to 40 g/m$^2$ and at least one continuous long fiber layer (S) having a mean fiber diameter, determined as described in the

description, of 10 $\mu$m to 30 $\mu$m are integrated by partial thermocompression bonding, wherein the continuous long fiber layer (S) is composed of long fibers containing 97.0 wt% to 99.9 wt% of a polyester (component A) and 0.1 wt% to 3.0 wt% of a thermoplastic resin with a glass transition point temperature of 114°C to 160°C (component B), and the bulk density of the ultrafine fiber layer (M), determined as described in the description, is 0.35 g/cm$^3$ to 0.70 g/cm$^3$.

2. A nonwoven fabric having a layered structure in which at least one ultrafine fiber layer (M) having a mean fiber diameter, determined as described in the description, of 0.3 $\mu$m to 7 $\mu$m and a basis weight of 1 g/m$^2$ to 40 g/m$^2$ and at least one continuous long fiber layer (S) having a mean fiber diameter, determined as described in the description, of 10 $\mu$m to 30 $\mu$m are integrated by partial thermocompression bonding, wherein the continuous long fiber layer (S) is composed of long fibers with a birefringence, determined as described in the description, of 0.04 to 0.07, and the bulk density of the ultrafine fiber layer (M), determined as described in the description, is 0.35 g/cm$^3$ to 0.70 g/cm$^3$.

3. The nonwoven fabric according to claim 1 or 2, wherein component A is polyethylene terephthalate and component B is a polyacrylate-based resin.

4. The nonwoven fabric according to any one of claims 1 to 3, wherein the nonwoven fabric has on its surface a continuous long fiber layer that includes fibers with a melting point of at least 30°C lower than the melting point of the other layers.

5. The nonwoven fabric according to any one of claims 1 to 4, wherein the basis weight of the nonwoven fabric is 20 g/m$^2$ to 150 g/m$^2$, and the thickness is 2 mm or smaller.

6. The nonwoven fabric according to any one of claims 1 to 5, wherein the ultrafine fiber layer (M) and the continuous long fiber layer (S) are both composed of polyester-based fibers.

7. A layered nonwoven fabric in which nonwoven fabrics according to any one of claims 1 to 6 are layered.

8. The layered nonwoven fabric according to claim 7, which includes two or more ultrafine fiber layers (M), wherein one or more continuous long fiber layers (S) are disposed between each of the ultrafine fiber layers (M), and the distances between each of the ultrafine fiber layers (M) are 30 $\mu$m to 200 $\mu$m.

9. The layered nonwoven fabric according to claim 7 or 8, wherein two or more nonwoven fabrics having an SM-type or SMS-type layered structure integrated by thermocompression bonding are layered in an integral manner.

10. The layered nonwoven fabric according to any one of claims 7 to 9, wherein the bonding between the fibers of the ultrafine fiber layers (M) and continuous long fiber layers (S) or of the continuous long fiber layers (S) is point bonding.

11. The nonwoven fabric according to any one of claims 1 to 6, which is to be used as a skin material of a sound-absorbing material.

12. The layered nonwoven fabric according to any one of claims 7 to 10, which is to be used as a skin material of a sound-absorbing material.

13. A composite sound-absorbing material comprising a nonwoven fabric according to any one of claims 1 to 6 or a layered nonwoven fabric according to any one of claims 7 to 10, layered with an open-cell resin foam or a fiber porous material.

14. The composite sound-absorbing material according to claim 13, wherein the mean sound absorption coefficient (%) for sounds impinging from the skin material side at frequencies of 1000 Hz, 1600 Hz, 2000 Hz, 2500 Hz, 3150 Hz and 4000 Hz, by normal incidence measurement according to JIS A 1405, is at least 45% higher than that of the sound-absorbing base material alone.

**Patentansprüche**

1. Vliesstoff mit einer Schichtstruktur, in der wenigstens eine Schicht aus ultrafeinen Fasern (M) mit einem mittleren Faserdurchmesser, der so bestimmt wird, wie es in der Beschreibung beschrieben ist, von 0,3 $\mu$m bis 7 $\mu$m und einem Flächengewicht von 1 g/m$^2$ bis 40 g/m$^2$ und wenigstens eine Schicht aus langen Endlosfasern (S) mit einem mittleren Faserdurchmesser, der so bestimmt wird, wie es in der Beschreibung beschrieben ist, von 10 $\mu$m bis 30 $\mu$m durch partielles Thermokompressionsschweißen integriert sind, wobei die Schicht aus langen Endlosfasern (S) aus langen Fasern besteht, die 97,0 Gew.-% bis 99,9 Gew.-% eines Polyesters (Komponente A) und 0,1 Gew.-% bis 3,0 Gew.-% eines thermoplastischen Harzes mit einer Glasübergangstemperatur von 114 °C bis 160 °C (Komponente B) enthalten, und die Rohdichte der Schicht aus ultrafeinen Fasern (M), die so bestimmt wird, wie es in der Beschreibung beschrieben ist, 0,35 g/cm$^3$ bis 0,70 g/cm$^3$ beträgt.

2. Vliesstoff mit einer Schichtstruktur, in der wenigstens eine Schicht aus ultrafeinen Fasern (M) mit einem mittleren Faserdurchmesser, der so bestimmt wird, wie es in der Beschreibung beschrieben ist, von 0,3 $\mu$m bis 7 $\mu$m und einem Flächengewicht von 1 g/m$^2$ bis 40 g/m$^2$ und wenigstens eine Schicht aus langen Endlosfasern (S) mit einem mittleren Faserdurchmesser, der so bestimmt wird, wie es in der Beschreibung beschrieben ist, von 10 $\mu$m bis 30 $\mu$m durch partielles Thermokompressionsschweißen integriert sind, wobei die Schicht aus langen Endlosfasern (S) aus langen Fasern mit einer Doppelbrechung, die so bestimmt wird, wie es in der Beschreibung beschrieben ist, von 0,04 bis 0,07 besteht und die Rohdichte der Schicht aus ultrafeinen Fasern (M), die so bestimmt wird, wie es in der Beschreibung beschrieben ist, 0,35 g/cm$^3$ bis 0,70 g/cm$^3$ beträgt.

3. Vliesstoff gemäß Anspruch 1 oder 2, wobei Komponente A Polyethylenterephthalat ist und Komponente B ein Harz auf Polyacrylatbasis ist.

4. Vliesstoff gemäß einem der Ansprüche 1 bis 3, wobei der Vliesstoff an seiner Oberfläche eine Schicht aus langen Endlosfasern aufweist, die Fasern umfasst, deren Schmelzpunkt um wenigstens 30 °C niedriger ist als der Schmelzpunkt der anderen Schichten.

5. Vliesstoff gemäß einem der Ansprüche 1 bis 4, wobei das Flächengewicht des Vliesstoffs 20 g/m$^2$ bis 150 g/m$^2$ beträgt und die Dicke 2 mm oder weniger beträgt.

6. Vliesstoff gemäß einem der Ansprüche 1 bis 5, wobei die Schicht aus ultrafeinen Fasern (M) und die Schicht aus langen Endlosfasern (S) beide aus Fasern auf Polyesterbasis bestehen.

7. Geschichteter Vliesstoff, in dem Vliesstoffe gemäß einem der Ansprüche 1 bis 6 geschichtet sind.

8. Geschichteter Vliesstoff gemäß Anspruch 7, der zwei oder mehr Schichten aus ultrafeinen Fasern (M) umfasst, wobei sich eine oder mehrere Schichten aus langen Endlosfasern (S) zwischen je zwei der Schichten aus ultrafeinen Fasern (M) befinden und die Abstände zwischen den jeweiligen Schichten aus ultrafeinen Fasern (M) 30 $\mu$m bis 200 $\mu$m betragen.

9. Geschichteter Vliesstoff gemäß Anspruch 7 oder 8, wobei zwei oder mehr Vliesstoffe mit einer Schichtstruktur des SM-Typs oder des SMS-Typs durch Thermokompressionsschweißen integral geschichtet sind.

10. Geschichteter Vliesstoff gemäß einem der Ansprüche 7 bis 9, wobei es sich bei der Bindung zwischen den Fasern und den Schichten aus ultrafeinen Fasern (M) und den Schichten aus langen Endlosfasern (S) oder der Schichten aus langen Endlosfasern (S) um eine punktuelle Verbindung handelt.

11. Vliesstoff gemäß einem der Ansprüche 1 bis 6, der als Hautmaterial eines schallabsorbierenden Materials verwendet werden soll.

12. Geschichteter Vliesstoff gemäß einem der Ansprüche 7 bis 10, der als Hautmaterial eines schallabsorbierenden Materials verwendet werden soll.

13. Zusammengesetztes schallabsorbierendes Material, das einen Vliesstoff gemäß einem der Ansprüche 1 bis 6 oder einen geschichteten Vliesstoff gemäß einem der Ansprüche 7 bis 10 umfasst, die mit einem offenzelligen Harzschaumstoff oder einem porösen Fasermaterial geschichtet sind.

14. Zusammengesetztes schallabsorbierendes Material gemäß Anspruch 13, wobei der mittlere Schallabsorptionskoeffizient (%) für Schalle, die von der Hautmaterialseite her mit Frequenzen von 1000 Hz, 1600 Hz, 2000 Hz, 2500 Hz, 3150 Hz und 4000 Hz auftreffen, bei normaler Inzidenzmessung gemäß JIS A 1405 um wenigstens 45% höher ist als der des schallabsorbierenden Materials allein.

**Revendications**

1. Textile non tissé ayant une structure stratifiée dans laquelle au moins une couche de fibres ultrafines (M) ayant un diamètre moyen de fibre, déterminé comme décrit dans la description, de 0,3 $\mu$m à 7 $\mu$m et une masse de base de 1 g/m$^2$ à 40 g/m$^2$ et au moins une couche de fibres longues continues (S) ayant un diamètre moyen de fibre, déterminé comme décrit dans la description, de 10 $\mu$m à 30 $\mu$m sont intégrées par liaison par thermocompression partielle, dans lequel la couche de fibres longues continues (S) est constituée de fibres longues contenant de 97,0 % en masse à 99,9 % en masse d'un polyester (constituant A) et de 0,1 % en masse à 3,0 % en masse d'une résine thermoplastique avec une température de point de transition vitreuse de 114°C à 160°C (constituant B), et la masse volumique apparente de la couche de fibres ultrafines (M), déterminée comme décrit dans la description, est de 0,35 g/cm$^3$ à 0,70 g/cm$^3$.

2. Textile non tissé ayant une structure stratifiée dans laquelle au moins une couche de fibres ultrafines (M) ayant un diamètre moyen de fibre, déterminé comme décrit dans la description, de 0,3 $\mu$m à 7 $\mu$m et une masse de base de 1 g/m$^2$ à 40 g/m$^2$ et au moins une couche de fibres longues continues (S) ayant un diamètre moyen de fibre, déterminé comme décrit dans la description, de 10 $\mu$m à 30 $\mu$m sont intégrées par liaison par thermocompression partielle, dans lequel la couche de fibres longues continues (S) est constituée de fibres longues avec une biréfringence, déterminée comme décrit dans la description, de 0,04 à 0,07, et la masse volumique apparente de la couche de fibres ultrafines (M), déterminée comme décrit dans la description, est de 0,35 g/cm$^3$ à 0,70 g/cm$^3$.

3. Textile non tissé selon la revendication 1 ou 2, dans lequel le constituant A est du poly(éthylène téréphtalate) et le constituant B est une résine à base de polyacrylate.

4. Textile non tissé selon l'une quelconque des revendications 1 à 3, dans lequel le textile non tissé présente sur sa surface une couche de fibres longues continues qui inclut des fibres avec un point de fusion d'au moins 30°C inférieur au point de fusion des autres couches.

5. Textile non tissé selon l'une quelconque des revendications 1 à 4, dans lequel la masse de base du textile non tissé est de 20 g/m$^2$ à 150 g/m$^2$ et l'épaisseur est de 2 mm ou inférieure.

6. Textile non tissé selon l'une quelconque des revendications 1 à 5, dans lequel la couche de fibres ultrafines (M) et la couche de fibres longues continues (S) sont toutes deux constituées de fibres à base de polyester.

7. Textile non tissé stratifié dans lequel les textiles non tissés selon l'une quelconque des revendications 1 à 6 sont stratifiés.

8. Textile non tissé stratifié selon la revendication 7, qui inclut deux couches de fibres ultrafines (M) ou plus, dans lequel une ou plusieurs couches de fibres longues (S) sont disposées entre chacune des couches de fibres ultrafines (M), et les distances entre chacune des couches de fibres ultrafines (M) sont de 30 $\mu$m à 200 $\mu$m.

9. Textile non tissé stratifié selon la revendication 7 ou 8, dans lequel deux textiles non tissés ou plus présentant une structure stratifiée de type-SM ou type-SMS intégrée par liaison par thermocompression sont stratifiés dans une manière intégrale.

10. Textile non tissé stratifié selon l'une quelconque des revendications 7 à 9, dans lequel la liaison entre les fibres des couches de fibres ultrafines (M) et couches de fibres longues continues (S) ou des couches de fibres longues continues (S) est une liaison par point.

11. Textile non tissé selon l'une quelconque des revendications 1 à 6, qui est destiné à être utilisé comme un matériau de peau d'un matériau insonorisant.

12. Textile non tissé stratifié selon l'une quelconque des revendications 7 à 10, qui est destiné à être utilisé comme un matériau de peau d'un matériau insonorisant.

13. Matériau insonorisant composite comprenant un textile non tissé selon l'une quelconque des revendications 1 à 6 ou un textile non tissé stratifié selon l'une quelconque des revendications 7 à 10, stratifié avec une mousse de résine à alvéoles ouvertes ou un matériau poreux de fibres.

14. Matériau insonorisant composite selon la revendication 13, dans lequel le coefficient moyen d'insonorisation (%) pour des sons heurtant le côté de matériau de peau à des fréquences de 1 000 Hz, 1 600 Hz, 2 000 Hz, 2 500 Hz, 3 150 Hz et 4 000 Hz, par mesure d'incidence normale selon JIS A 1405, est au moins 45 % supérieur à celui du matériau de base insonorisant seul.

**REFERENCES CITED IN THE DESCRIPTION**

**Patent documents cited in the description**

- JP 2015121631 A
- JP 4574262 B
- JP 3705419 B
- JP 2009145425 A
- JP 5603575 B
- JP 2014037647 A
- JP 2013163869 A